# EUROPEAN PATENT SPECIFICATION

(11) **EP 1 520 884 B1**
(45) Date of publication and mention of the grant of the patent: **19.09.2007**
(21) Application number: 04023388.4
(22) Date of filing: 01.10.2004
(51) Int. Cl.: C09D 11/00

(54) **Ink composition and inkjet recording method**
Tintenzusammensetzung, Tintenstrahlaufzeichnungsverfahren unter Verwendung derselben und damit aufgezeichnetes Substrat
Compositon d'encre, procédé d'enregistrement par jet d'encre utilisant cet encre et matière enregistrée

(30) Priority: 03.10.2003 JP 2003345359; 26.02.2004 JP 2004052174; 16.06.2004 JP 2004178311
(43) Date of publication of application: 06.04.2005
(73) Proprietor: FUJIFILM Corporation, Minato-ku Tokyo (JP)
(72) Inventor: Takahashi, Miki, Yoshida-cho Haibara-gun Shizuoka (JP)
(74) Representative: HOFFMANN EITLE

(56) References cited:
- EP-A- 1 471 121
- US-A- 5 952 048

## Description

### Background of the Invention

### 1. Field of the Invention

The present invention relates to an ink composition and an inkjet recording method. More specifically, the present invention relates to an ink composition and an inkjet recording method, which can realize low-temperature and high-speed fixing of a high-quality image on a recording medium and ensure excellent offset resistance and blocking resistance (property of causing no transfer to the back surface when recording mediums after fixing are superposed).

### 2. Related Art

The image recording method of forming an image on a recording medium such as paper based on image data signals includes an electrophotographic system, a sublimation-type or melting-type heat-transfer system and an inkjet system. The electrophotographic system requires a process of forming an electrostatic latent image on a photoreceptor drum through electrification and exposure and therefore, suffers from complicated system and expensive apparatus. The heat-transfer system uses an ink ribbon and therefore, suffers from high running cost and treatment of a waste material, though the apparatus therefor is inexpensive. On the other hand, the inkjet system uses an inexpensive apparatus and forms an image directly on a recording medium by jetting out an ink only on a required image area, so that efficient use of an ink and low running cost can be ensured. Furthermore, noises are less generated and therefore, this system is excellent as the image recording system.

The inkjet recording system includes a system of flying an ink droplet by utilizing the pressure of water vapor generated due to heat of a heating element, a system of flying an ink droplet by utilizing a mechanical pressure pulse generated from a piezoelectric element, and a system of flying an ink droplet containing a charged particle by utilizing an electrostatic field (see, Patent Documents 1 and 2: Japanese Patent No. 3,315,334 and U.S. Patent 6,158,844). In the system of flying an ink droplet by water vapor or mechanical pressure, the flying direction of the ink droplet cannot be controlled and due to distortion of an ink nozzle or convection of an air, the ink droplet can be hardly landed exactly on a desired position of a printing medium.

On the other hand, the system of utilizing an electrostatic field is excellent in that since the flying direction of an ink droplet is controlled by an electrostatic field, the ink droplet can be landed exactly on a desired position and therefore, a high-quality image-formed material (printed matter) can be prepared.

The ink composition used for the inkjet recording utilizing an electrostatic field is an ink composition comprising a dispersion medium and a charged particle containing at least a coloring material (see, Patent Documents 3 and 4: JP-A-8-291267 (the term "JP-A" as used herein means an "unexamined published Japanese patent application") and U.S. Patent 5,952,048). The ink composition containing a coloring material is useful because four color inks of yellow, magenta, cyan and black and furthermore, special color inks of gold or silver can be prepared by changing the coloring material, and a color image-formed material (printed matter) can be obtained. However, in order to maintain high-seed and high-quality recording and stably output a color image-formed material (printed matter), means for fixing the ink composition on paper is necessary. In the inkjet system, however, low-temperature and high-speed fixing incurring no deterioration of the image quality must be realized in the state that a solvent is present in the image area and in paper at the fixing, and fully satisfied fixing can be hardly attained at present.

### Summary of the Invention

An object of the present invention is to provide an ink composition and an inkjet recording method, which can realize low-temperature and high-speed fixing of a high-quality image and ensure excellent offset resistance and blocking resistance.

The present invention comprises the following constitutions.
1. An ink composition comprising: a dispersion medium; and a charged particle containing at least a coloring material, wherein said charged particle contains at least one of a copolymer having a polyester structure and a polymer having a liquid crystalline structure.
2. The ink composition according to the above item 1, wherein said charged particle contains the copolymer having a polyester structure.
3. The ink composition according to the above item 2, wherein the copolymer having a polyester structure has a structural unit represented by the following formula (A) or (B) : 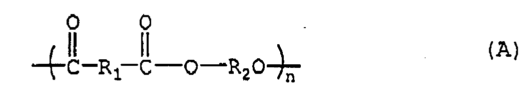 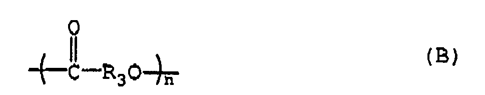 wherein R₁ to R₃ each independently represents a divalent hydrocarbon group having from 1 to 20 carbon atoms, and the hydrocarbon group may contain an ether bond, an amino group, a hydroxy group or a halogen substituent, n is an integer of 2 or more.
4. The ink composition according to the above item 2, wherein the polyester structure has a melting point (Tm).
5. The ink composition according to the above item 4, wherein the melting point of the polyester structure is from 20 to 120°C.
6. The ink composition according to the above item 1, wherein said charged particle contains the polymer having the liquid crystalline structure.
7. The ink composition according to the above item 6, wherein the polymer having the liquid crystalline structure contains a polymer side chain having a structure represented by the following formula (I):

   -X-Ar-Y-Ar-Z (I)

   wherein X represents a single bond or a divalent linking group to the polymer main chain skeleton, Ar represents a divalent aromatic hydrocarbon group which may have a substituent, Y represents a divalent linking group for linking two Ar groups, and Z represents a substituent of the adjacent Ar group.
8. An inkjet recording method comprising flying an ink composition as an ink droplet by an inkjet recording system using an electrostatic field, wherein the ink composition is the ink composition described in any one of the above items 1 to 7.

The present invention can provide an ink composition and an inkjet recording method, which can realize low-temperature and high-speed fixing of a high-quality image and ensure excellent offset resistance and blocking resistance.

Particularly, in the ink composition of the present invention, the coating agent copolymer has a polyester structure and therefore, sharp temperature responsibility and sharp melting can be attained. Furthermore, the polyester structure is bonded to the polymer main chain and therefore, the offset resistance can be maintained even when the polyester structure is melted. In addition, the polyester structure can be swiftly solidified by the cooling after fixing and therefore, the blocking resistance can be enhanced.

In addition, by virtue of containing the polymer having a liquid crystalline structure in the ink composition of the present invention, melting sharply occurs with respect to the temperature (sharp melting property) and at the same time, the blocking resistance can be enhanced because crystallization swiftly proceeds by the cooling after fixing.

### BRIEF DESCRIPTION OF THE DRAWINGS

Fig. 1 is an entire constitutional view schematically showing one example of the inkjet printing apparatus for use in the present invention.
Fig. 2 is a perspective view showing the constitution of the inkjet head of the inkjet recording apparatus for use in the present invention (for clearly showing the constitution, the edge of the guard electrode in each ejection part is not drawn).
Fig. 3 is a side cross-sectional view showing the distributed state of charged particles (corresponding to the portion cut along the arrow X-X in Fig. 2) when a large number of ejection parts are used in the inkjet head shown in Fig. 2.

### Description of Reference Numerals and Symbols

- G: flown ink droplet
- P: recording medium
- Q: ink flow
- R: charged particle
- 1: inkjet recording apparatus
- 2, 2Y, 2M, 2C, 2K: ejection heads
- 3: ink circulating system
- 4: head driver
- 5: position-controlling means
- 6A, 6B, 6C: rollers for straining the conveyance belt
- 7: conveyance belt
- 8: conveyance belt position-detecting means
- 9: electrostatic adsorption means
- 10: destaticizing means
- 11: dynamic means
- 12: feed roller
- 13: guide
- 14: image fixing means
- 15: guide
- 16: recording medium position-detecting means
- 17: exhaust fan
- 18: solvent vapor adsorbent
- 38: ink guide
- 40: supporting rod part
- 42: ink meniscus
- 44: insulating layer
- 46: first ejection electrode
- 48: insulating layer
- 50: guard electrode
- 52: insulating layer
- 56: second ejection electrode
- 58: insulating layer
- 62: floating conductive plate
- 64: cover film
- 66: insulating member
- 70: inkjet head
- 72: ink flow path
- 74: substrate
- 75, 75A, 75B: openings
- 76, 76A, 76B: ejection parts
- 78: ejection part

### DETAILED DESCRIPTION OF THE INVENTION

The present invention is described in detail below.

### [Coating Agent]

In the ink composition of the present invention, the coloring material such as pigment is preferably dispersed (formed into particles) in the state of being coated with a coating agent rather than dispersed (formed into particles) directly in the dispersion medium. When coated with a coating agent, the coloring material can have its electric charge shielded to allow for imparting preferred electric charge properties and also, difference in the dispersion stability which varies depending on the kind of the coloring material can be eliminated to impart good dispersion stability.

Also, in the present invention, fixing is performed by heating means such as heat roller after the inkjet recording on a recording medium and at this time, the coating agent is melted due to heat, whereby efficient fixing can be attained.

The charged particle contained in the ink composition of the present invention is characterized by containing at least one of a copolymer having a polyester structure and a polymer having a liquid crystalline structure.

Firstly, the copolymer having a polyester structure will be explained below.

The copolymer having a polyester structure for use in the present invention preferably has a structural unit represented by the following formula (A) or (B):

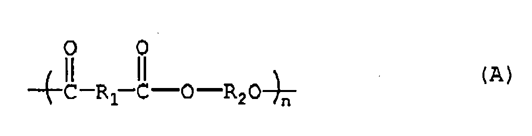

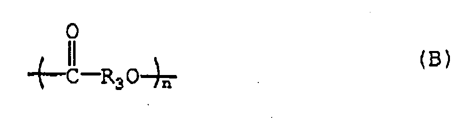

In formulae (A) and (B), R₁ to R₃ each independently represents a divalent hydrocarbon group having from 1 to 20 carbon atoms, provided that the hydrocarbon group may contain an ether bond, an amino group, a hydroxy group or a halogen substituent. Preferable R₁ to R₃ each independently. represents a divalent hydrocarbon group having from 1 to 12 carbon atoms, a cyclohexylene group which may be substittued, or phenylene group which may be substittued.

n is an integer of 2 or more, preferably 5 or more.

The polymer containing the constituent unit represented by formula (A) can be obtained by dehydration-condensing a corresponding dicarboxylic acid or acid anhydride and a diol according to a known method. Examples of the dicarboxylic acid used include succinic anhydride, adipic acid, sebacic acid, isophthalic acid, terephthalic acid, 1,4-phenylenediacetic acid and diglycolic acid. Preferred examples of the diol used include ethylene glycol, 1,2-propanediol, 1,3-propanediol, 1,4-butanediol, 1,6-hexanediol, 1,10-decanediol, 2-butene-1,4-diol, 1,4-cyclohexanediol, 1,4-cyclohexanedimethanol, 1,4-benzenedimethanol and diethylene glycol.

The polymer containing the constituent unit represented by formula (B) can be obtained by dehydration-condensing a carboxylic acid having a corresponding hydroxy group according to a known method or by ring-opening polymerizing a cyclic ester of a carboxylic acid having a corresponding hydroxy group according to a known method. Examples of the carboxylic acid having a hydroxyl group or the cyclic ester thereof used include 6-hydroxyhexanoic acid, 11-hydroxyundecanoic acid, hydroxybenzoic acid and ε-caprolactone.

The polymer structure having the above-described polyester structure may be a graft polymer type or a block polymer type. Preferred examples of the method for introducing the polyester structure into the polymer include, in the case of a graft polymer type, A. a method of copolymerizing a polyester having a polymerizable group at the terminal with another polymerizable monomer, B. a method of reacting a polyester with a polymer having a functional group capable of reacting with the terminal functional group of the polyester to introduce the polyester structure through a polymer reaction, and C. a method of sequentially reacting a hydroxy group-containing carboxylic acid or cyclic ester compound or the like from the polymer side chain to introduce the polyester structure; and in the case of a block polymer type, (1) a method of polymer-reacting the terminal functional group of polyester with a polymer having an initiator terminal capable of reacting therewith, and (2) a method of sequentially reacting a hydroxy group-containing carboxylic acid or cyclic ester compound from the polymer initiator terminal to introduce the polyester structure, but the present invention is not limited to these methods.

The ratio of the polyester structure introduced is preferably from 1 to 99 mass%, more preferably from 2 to 85 mass%, still more preferably from 5 to 70 mass%, based on the entire amount of copolymer.

The molecular weight (Mw) of the polyester structure moiety is preferably from 100 to 100,000, more preferably from 200 to 80,000, still more preferably from 500 to 70,000.

The polyester structure moiety most preferably has a melting point (Tm), and the melting point (Tm) of this moiety is preferably from 20 to 120°C.

The melting point (Tm) as used herein means a peak temperature of endothermic peak measured by DSC. In the present invention, the melting point (Tm) is measured by using a measuring apparatus DSC TA3000 (manufactured by METTLER TOLEDO) at a temperature-rising rate of 10°C/min in the temperature range from -90°C to 150°C.

The copolymer having a polyester structure in the present invention is a copolymer having a copolymerization component other than the polyester structure as set forth below.

The copolymerization component other than the polyester structure can be obtained by radical-polymerizing a radical polymerizable monomer according to a known method. The radical polymerizable monomer is not particularly limited, but preferred examples of the monomer component include (substituted) (meth)acrylic acid esters such as methyl (meth)acrylate, ethyl (meth)acrylate, propyl (meth)-acrylate, butyl (meth)acrylate, isobutyl (meth)acrylate, tert-butyl (meth)acrylate, hexyl (meth)acrylate, cyclohexyl (meth)acrylate, octyl (meth)acrylate, decyl (meth)acrylate, dodecyl (meth)acrylate, hexadecyl (meth)acrylate, octadecyl (meth)acrylate, phenyl (meth)acrylate, benzyl (meth)-acrylate, 2-chloroethyl (meth)acrylate, 2-hydroxyethyl (meth)acrylate, 4-hydroxybutyl (meth)acrylate, glycidyl (meth)acrylate, 2-dimethylaminoethyl (meth) acrylate, 2-diethylaminoethyl (meth)acrylate, methoxyethyl (meth)acrylate, ethoxyethyl (meth)acrylate, phenoxyethyl (meth)acrylate, o-aminosulfonylphenyl (meth)acrylate, m-aminosulfonylphenyl (meth)acrylate and p-aminosulfonylphenyl (meth)acrylate; acrylamides and methacrylamides, such as acrylamide, methacrylamide, N-methylolacrylamide, N-methylolmethacrylamide, N-ethylacrylamide, N-ethylmethacrylamide, N-hexylacrylamide, N-hexylmethacrylamide, N-cyclohexylacrylamide, N-cyclohexylmethacxylamide, N-hydroxyethylacrylamide, N-hydroxyethylacrylamide, N-phenylacrylamide, N-phenylmethacrylamide, N-benzylacrylamide, N-benzylmethacrylamide, N-nitrophenylacrylamide, N-nitrophenylmethacrylamide, N-ethyl-N-phenylacrylamide, N-ethyl-N-phenylmethacrylamide, N-(o-aminosulfonylphenyl)-(meth)acrylamide, N-(m-aminosulfonylphenyl)(meth)acrylamide, N-(p-aminosulfonylphenyl)(meth)acrylamide; vinyl ethers such as ethyl vinyl ether, 2-chloroethyl vinyl ether, hydroxyethyl vinyl ether, propyl vinyl ether, butyl vinyl ether, octyl vinyl ether and phenyl vinyl ether; vinyl esters such as vinyl acetate, vinyl chloroacetate, vinyl butyrate and vinyl benzoate; olefins such as ethylene, propylene, isobutylene, butadiene and isoprene; N-vinylpyrrolidone, N-vinylcarbazole, N-vinylpyridine, acrylonitrile and methacrylonitrile; ethylene oxide group-containing monomers such as polyethylene glycol mono(meth)acrylate, polypropylene glycol mono(meth)acrylate and methoxypolyethylene glycol mono(math)acrylate; ethylene-based monomers such as ethylene, propylene and butadiene; styrene-based monomers such as styrene and 4-methylstyrene; and monomers containing a (meth)acrylic acid, a maleic acid, an itaconic acid or a quaternary ammonium base.

In view of easiness of particle formation, the copolymer having a polyester structure of the present invention preferably has a weight average molecular weight of 2,000 to 1,000,000, more preferably from 3,000 to 500,000, still more preferably from 5,000 to 200,000. Also, the polydispersion degree (weight average molecular weight/number average molecular weight, Mw/Mn) is preferably from 1.0 to 7.0, more preferably from 1.0 to 5.0, still more preferably from 1.0 to 4.0. Furthermore, in view of easiness of fixing, a polymer having a glass transition point or melting point of 40 to 120°C is preferred.

As for the physical properties of the copolymer having a polyester structure of the present invention, the dynamic modulus is preferably 10⁶ Pa or more at 50°C, more preferably from 10³ to 10⁵ Pa at 100°C.

The dynamic modulus as the physical property of polymer indicates deformability or flowability of the polymer, and the behavior thereof belongs to the academic system called rheology.

The dynamic modulus is considered to have close relation to, for example, the thermal flowability of ink particle, that is, flow property, the less transferability of image to the back surface of recording paper superposed thereon, that is, blocking resistance, and the offset of causing a part of the image to transfer to a heat roller at the thermal fixing of the ink image.

The measurement of dynamic modulus is well known in the art and the dynamic modulus can be measured with good reproducibility but, for example, by using a measuring apparatus called rheometer and by sandwiching a heat-melted polymer with rotors (gap: 1 mm) and applying vibration at a fixed frequency, the dynamic modulus can be determined from the slippage of frequency.

More specifically, for example, 3 g of a finely ground product of a sample is set in the sample chamber of a rheometer "Model Rheosol-G1000" manufactured by UBM and according to the predetermined measuring method, the sample is melted at 200°C, the rotors are then vibrated at a frequency of 1 Hz while dropping the temperature, and by automatically recording the "temperature-dynamic modulus curve", the dynamic modulus can be measured.

As a preferred behavior, the dynamic modulus curve preferably has two inflection points in the range from 40 to 100°C.

Next, the polymer having a liquid crystalline structure will be explained below.

The liquid crystalline polymer as used herein includes a polymer having a liquid crystalline structure in the entire polymer molecule and a polymer having a liquid crystalline structure in the main or side chain of the polymer chain. Also, the liquid crystalline polymer may be a copolymer containing a structural unit having a liquid crystalline structure.

Examples of the liquid crystalline polymer include those described in Naoyuki Koide (compiler), Ekisho Polymer (Liquid Crystalline Polymer), CMC Shuppan (1987), and Takeshi Kamiya and Tetsuo Shimizu, Ekisho Polymer no Shin Jidai (New Age of Liquid Crystal Polymer), Kogyo Chosa Kai (1991).

The liquid crystalline polymer for use in the present invention is preferably a liquid crystalline polymer having, for example, a characteristic pattern when observed through a polarizing microscope, or having a phase transition temperature which can be observed by DSC measurement, more preferably a liquid crystalline polymer having a rigid rod-like or straight-chained structure resulting from linking of aromatic rings. The liquid crystalline structure is preferably present in the side chain of polymer molecule.

The polymer having a liquid crystalline structure for use in the present invention preferably contains, in the polymer side chain, a structure represented by the following formula (I):

-X-Ar-Y-Ar-Z (I)

wherein X represents a single bond or a divalent linking group to the polymer main chain skeleton, Ar represents a divalent aromatic hydrocarbon group which may have a substituent, Y represents a divalent linking group for linking two Ar groups, and Z represents a substituent of the adjacent Ar group.

Examples of the divalent linking group represented by X include a divalent hydrocarbon group which may have a group containing one or more heteroatom(s) selected from the group consisting of oxygen atom, nitrogen atom and sulfur atom. Preferred examples of the structure thereof include an ester structure, an amide structure, an ether structure and a thio ether structure, with the following structures being more preferred. 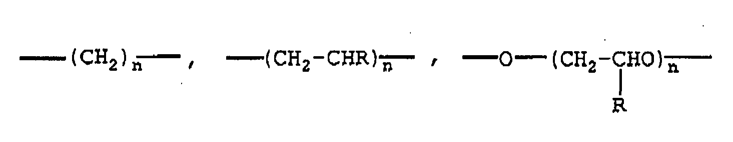 wherein R represents a hydrogen atom or a hydrocarbon group having from 1 to 30 carbon atoms, which may have a substituent, and n represents an integer of 1 to 50.

Examples of the aromatic hydrocarbon group represented by Ar include, but are not limited to, a benzene ring which may have a substituent, and a condensed ring formed from 2 to 4 benzene rings. Incidentally, the linking position is not particularly limited.

Examples of the divalent linking group represented by Y include a single bond and a divalent hydrocarbon group which may have a group containing one or more heteroatom(s) selected from the group consisting of oxygen atom, nitrogen atom and sulfur atom. Preferred examples of the structure thereof include the following structures: 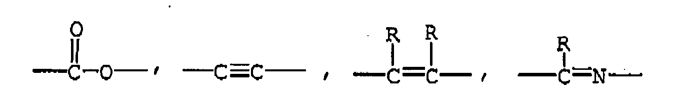 wherein R represents a hydrogen atom or a hydrocarbon group having from 1 to 30 carbon atoms, which may have a substituent.

The substituent represented by z is not particularly limited but is preferably an alkyl group, an alkoxy group or a cyano group.

Specific examples of the structure represented by formula (I) are set forth below, but the present invention is not limited thereto.

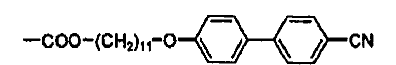

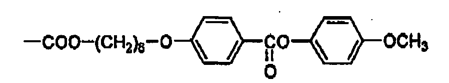

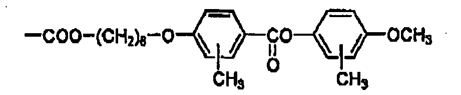

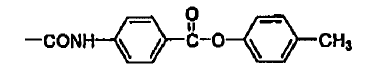

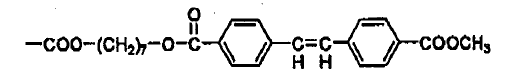

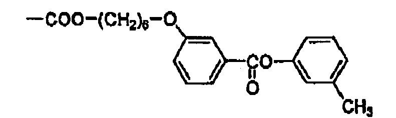

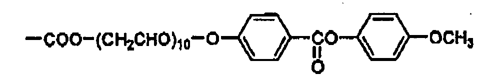

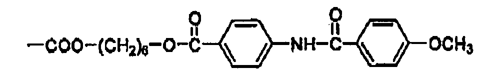

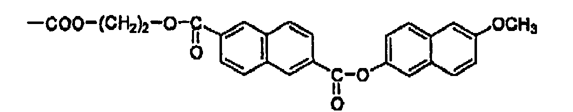

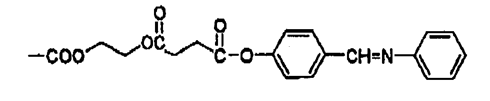

The method for synthesizing the liquid crystalline polymer which can be used in the present invention is not particularly limited, but examples thereof include a method of polymerizing a radical polymerizable monomer containing a functional group having a liquid crystalline structure, and a method of bonding a functional group in the polymer side chain to a functional group in a structure having liquid crystallinity by a polymer reaction.

The liquid crystalline polymer may be a homopolymer or a copolymer with another constituent component. The polymer is not particularly limited in the structure and may be either a graft polymer or a block polymer.

The monomer used as the copolymerization component is not particularly limited and may be a known polymerizable monomer. Examples thereof include (substituted) (meth)acrylic acid esters such as methyl (meth)acrylate, ethyl (meth)acrylate, propyl (meth)acrylate, butyl (meth)acrylate, isobutyl (meth)acrylate, tert-butyl (meth)acrylate, hexyl (meth)acrylate, cyclohexyl (meth)acrylate, octyl (meth)acrylate, decyl (meth)acrylate, dodecyl (meth)acrylate, hexadecyl (meth)acrylate, octadecyl (meth)acrylate, phenyl (meth)acrylate, benzyl (meth)-acrylate, 2-chloroethyl (meth)acrylate, 2-hydroxyethyl (meth)acrylate, 4-hydroxybutyl (meth)acrylate, glycidyl (meth)acrylate, 2-dimethylaminoethyl (meth)acrylate, 2-diethylaminoethyl (meth)acrylate, methoxyethyl (meth)acrylate, ethoxyethyl (meth)acrylate, phenoxyethyl (meth)acrylate, o-aminosulfonylphenyl (meth)acrylate, m-aminosulfonylphenyl (meth)acrylate and p-aminosulfonylphenyl (meth)acrylate; acrylamides and methacrylamides, such as acrylamide, methacrylamide, N-methylolacrylamide, N-methylolmethacrylamide, N-ethylacrylamide, N-ethylmethacrylamide, N-hexylacrylamide, N-hexylmethacrylamide, N-cyclohexylacrylamide, N-cyclohexylmethacrylamide, N-hydroxyethylacrylamide, N-hydroxyethylacrylamide, N-phenylacrylamide, N-phenylmethacrylamide, N-benzylacrylamide, N-benzylmethacrylamide, N-nitrophenylacrylamide, N-nitrophenylmethacrylamide, N-ethyl-N-phenylacrylamide, N-ethyl-N-phenylmethacrylamide, N-(o-aminosulfonylphenyl)-(meth)acrylamide, N-(m-aminosulfonylphenyl)(meth)acrylamide, N-(p-aminosulfonylphenyl)(meth)acrylamide; vinyl ethers such as ethyl vinyl ether, 2-chloroethyl vinyl ether, hydroxyethyl vinyl ether, propyl vinyl ether, butyl vinyl ether, octyl vinyl ether and phenyl vinyl ether; vinyl esters such as vinyl acetate, vinyl chloroacetate, vinyl butyrate and vinyl benzoate; olefins such as ethylene, propylene, isobutylene, butadiene and isoprene; N-vinylpyrrolidone, N-vinylcarbazole, N-vinylpyridine, acrylonitrile and methacrylonitrile; ethylene oxide group-containing monomers such as polyethylene glycol mono(meth)acrylate, polypropylene glycol mono(meth)acrylate and methoxypolyethylene glycol mono(meth)acrylate; ethylene-based monomers such as ethylene, propylene and butadiene; styrene-based monomers such as styrene and 4-methylstyrene; and monomers containing a (meth)acrylic acid, a maleic acid, an itaconic acid or a quaternary ammonium base.

In the liquid crystalline polymer, the content of the monomer unit having a liquid crystalline structure is preferably 2 mass% or more, more preferably 10 mass% or more, still more preferably 20 mass% or more.

The weight average molecular weight Mw of the liquid crystalline polymer for use in the present invention is, in view of particle-forming property, preferably from 2,000 to 1,000,000 and at the same time, the polydispersion degree (weight average molecular weight Mw/number average molecular weight Mn) is preferably from 1.0 to 5.0. More preferably, Mw is from 5,000 to 200,000 and the polydispersion degree (Mw/Mn) is from 1.0 to 3.0. Furthermore, in view of easiness of fixing, a polymer where any one of the softening point, the glass transition point and the melting point is from 40 to 120°C is preferred.

### [Coating Agent]

In the ink composition of the present invention, the coloring material such as pigment is preferably dispersed (formed into particles) in the state of being coated with a coating agent rather than dispersed (formed into particles) directly in the dispersion medium. In the present invention, the above-described liquid crystalline polymer is preferably used as the coating agent. When the coloring material is coated with a coating agent, the electric charge of the coloring material can be shielded to allow for imparting preferred electric charge properties and also, difference in the dispersion stability which varies depending on the kind of the coloring material can be eliminated to impart good dispersion stability. Furthermore, the ink composition of the present invention after the inkjet recording on a recording medium is preferably fixed by means of a heating device such as heat roller and at this time, the coating agent is melted due to heat, whereby efficient fixing can be attained.

Examples of the coating agent include, other than the copolymer containing a polyester structure and the above-described liquid crystalline polymer, rosins, rosin-modified phenol resin, alkyd resin, (meth)acryl-based polymer, polyurethane, polyester, polyamide, polyethylene, polybutadiene, polystyrene, polyvinyl acetate, acetal modification product of polyvinyl alcohol, and polycarbonate. Among these, in view of easiness of formation of particles, preferred are polymers having a weight average molecular weight Mw of 2,000 to 1,000,000, more preferably from 5,000 to 100,000, and a polydispersion degree (Mw/Mn) of 1.0 to 5.0, more preferably from 1.0 to 3.0. Furthermore, in view of easiness of fixing, polymers where at least one of the softening point, the glass transition point and the melting point is from 40 to 120°C are preferred.

As the another polymer component, (meth)acryl-based polymers, styrene/(meth)acryl-based polymers and polyesters are particularly preferable.

The content of another polymer component in the coating agent polymer is preferably from 0 to 99 mass%, more preferably from 0 to 70 mass%.

The content of the coating agent is preferably from 0.1 to 40 mass% based on the entire ink composition. With a content of 0.1 mass% or more, the amount of the coating agent is satisfied and sufficiently high fixing property can be obtained, and with a content of 40 mass% or less, a particle containing a coloring material and a coating agent can be successfully formed.

### [Dispersion Medium]

The dispersion medium is preferably a dielectric liquid having a high electric resistivity, specifically 10¹⁰ Ωcm or more. If a dispersion medium having a low electric resistivity is used, electric conduction is generated between adjacent recording electrodes and this is improper. The dielectric constant of the dielectric liquid is preferably 5 or less, more preferably 4 or less, still more preferably 3.5 or less. With a dielectric constant in such a range, an electric field can effectively act on charged particles in the dielectric liquid and this is preferred.

Examples of the dispersion medium for use in the present invention include a linear or branched aliphatic hydrocarbon, an alicyclic hydrocarbon, an aromatic hydrocarbon, a halogen substitution product of these hydrocarbons, and silicone oil. For example, hexane, heptane, octane, isooctane, decane, isodecane, decalin, nonane, dodecane, isododecane, cyclohexane, cyclooctane, cyclodecane, toluene, xylene, mesitylene, Isoper C, Isoper E, Isoper G, Isoper H, Isoper L, Isoper M (Isoper: a trade name of Exxon Corp.), Shellsol 70, Shellsol 71 (Shellsol: a trade name of Shell Oil Corp.), Amsco OMS, Amsco 460 solvent (Amsco: a trade name of American Mineral Spirits Co.) and KF-96L (a trade name of Shin-Etsu Silicone) may be used individually or in combination. The dispersion medium content is preferably from 20 to 99 mass% based on the entire ink composition. With a dispersion medium content of 20 mass% or more, coloring material-containing particles can be successfully dispersed in the dispersion medium and with a dispersion medium content of 99 mass% or less, the content of the coloring material can be satisfied.

### [Coloring Material]

The coloring material which can be used in the present invention includes known dyes and pigments. The coloring material can be selected according to use or purpose. For example, in view of color tone of the image-recorded material (printed matter), a pigment is preferably used (see, for example, Ganryo Bunsan Anteika to Hyomen Shori Gijutsu·Hyoka (Stabilization of Pigment Dispersion and Technique and Evaluation of Surface Treatment), 1st imp., Gijutsu Joho Kyokai (December 25, 2001), hereinafter sometimes referred to as "Non-Patent Document 1"). By changing the coloring material, four color inks of yellow, magenta, cyan and black can be prepared. In particular, when a pigment used for the offset printing ink or proof is used, the same color tone as the offset printed matter can be obtained and this is preferred.

Examples of the pigment for yellow ink include monoazo pigments such as C.I. Pigment Yellow 1 and C.I. Pigment Yellow 74, disazo pigments such as C.I. Pigment Yellow 12 and C.I. Pigment Yellow 17, non-benzidine azo pigments such as C.I. Pigment Yellow 180, azo lake pigments such as C.I. Pigment Yellow 100, condensed azo pigments such as C.I. Pigment Yellow 95, acid dye lake pigments such as G.I. Pigment Yellow 115, basic dye lake pigments such as C.I. Pigment Yellow 18, anthraquinone-based pigments such as Flavanthrone Yellow, isoindolinone pigments such as Isoindolinone Yellow 3RLT, quinophthalone pigments such as Quinophthalone Yellow, isoindoline pigments such as Isoindoline Yellow, nitroso pigments such as C.I. Pigment Yellow 153, metal complex salt azomethine pigments such as C.I. Pigment Yellow 117, and isoindolinone pigments such as C.I. Pigment Yellow 139.

Examples of the pigment for magenta ink include monoazo-based pigments such as C.I. Pigment Red 3, disazo pigments such as C.I. Pigment Red 38, azo lake pigments such as C.I. Pigment Red 53:1 and C.I. Pigment Red 57:1, condensed azo pigments such as C.I. Pigment Red 144, acid dye lake pigments such as C.I. Pigment Red 174, basic dye lake pigments such as C.I. Pigment Red 81, anthraquinone-based pigments such as C.I. Pigment Red 177, thioindigo pigments such as C.I. Pigment Red 88, perynone pigments such as C.I. Pigment Red 194, perylene pigments such as C.I. Pigment Red 149, quinacridone pigments such as C.I. Pigment Red 122, isoindolinone pigments such as C.I. Pigment Red 180, and alizarin lake pigments such as C.I. Pigment Red 83.

Examples of the pigment for cyan ink include disazo-based pigments such as C.I. Pigment Blue 25, phthalocyanine pigments such as C.I. Pigment Blue 15, acid dye lake pigments such as C.I. Pigment Blue 24, basic dye lake pigments such as C.I. Pigment Blue 1, anthraquinone-based pigments such as C.I. Pigment Blue 60, and alkali blue pigments such as C.I. Pigment Blue 18.

Examples of the pigment for black ink include organic pigments such as aniline black-based pigment, iron oxide pigments, and carbon black pigments such as furnace black, lamp black, acetylene black and channel black.

Furthermore, processed pigments as represented by microlith pigments such as microlith-A, microlith-K and microlith-T can also be suitably used. Specific examples thereof include Micolith Yellow 4G-A, Microlith Red BP-K, Microlith Blue 4G-T and Microlith Black C-T.

In addition, various pigments can be used, if desired. For example, calcium carbonate and titanium oxide pigments may be used as the pigment for white ink, aluminum powder may be used as the pigment for silver ink, and copper alloy may be used as the pigment for gold ink.

In view of easiness in the production of ink, it is fundamentally preferred to use one pigment for one color, but depending on the case, two or more pigments are preferably used in combination for.adjusting the color hue. For example, phthalocyanine is preferably mixed with carbon black for the preparation of black ink. Also, the pigment may be used after surface-treating it by a known method such as rosin treatment (see, Non-Patent Document 1, *supra*).

The pigment content is preferably from 0.1 to 50 mass% based on the entire ink composition. With a pigment content of 0.1 mass% or more, the amount of the pigment is satisfied and satisfactory color formation can be obtained in the printed matter and with a pigment content of 50 mass% or less, coloring material-containing particles can be successfully dispersed in the dispersion medium. The pigment content is more preferably from 1 to 30 mass%.

### [Dispersant]

In the present invention, for example, a mixture of the coloring material and the coating agent is dispersed (formed into particles) in a dispersion medium and for controlling the particle diameter and preventing the precipitation of particles, it is more preferred to use a dispersant.

Suitable examples of the dispersant include surfactants as represented by sorbitan fatty acid esters such as sorbitan monooleate, and polyethylene glycol fatty acid esters such as polyoxyethylene distearate. Other examples include a copolymer of styrene and maleic acid, an amine-modified product thereof, a copolymer of styrene and (meth)acryl compound, a (meth)acryl-based polymer, a copolymer of polyethylene and (meth)acryl compound, rosin, BYK-160, 162, 164, 182 (polyurethane-based polymers produced by Byk-Chemie), EFKA-401, 402 (acryl-based polymers produced by EFKA), and Solsperse 17000, 24000 (polyester-based polymers produced by Zeneca). In the present invention, in view of long-term storage stability of the ink composition, a polymer having a weight average molecular weight of 1,000 to 1,000,000 and a polydispersion degree (weight average molecular weight/number average molecular weight) of 1.0 to 7.0 is preferred, and a graft polymer or a block polymer is most preferred.

The polymer which is particularly suitably used in the present invention is a graft polymer comprising at least a polymer component containing at least either one of the constituent units represented by the following formulae (1) and (2), and a polymer component containing a constituent unit represented by the following formula (3) at least as a graft chain. 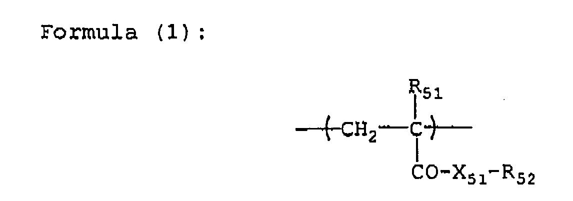 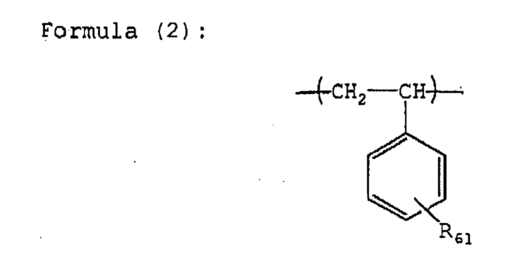 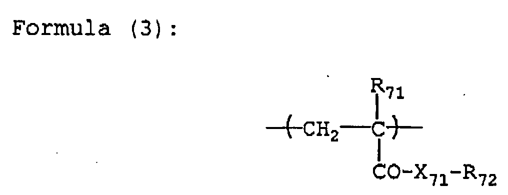 wherein X₅₁ represents an oxygen atom or -N(R₅₃)-, R₅₁ represents a hydrogen atom or a methyl group, R₅₂ represents a hydrocarbon group having from 1 to 10 carbon atoms, R₅₃ represents a hydrogen atom or a hydrocarbon group having from 1 to 10 carbon atoms, R₆₁ represents a hydrogen atom, a hydrocarbon group having from 1 to 20 carbon atoms, a halogen atom, a hydroxyl group or an alkoxy group having from 1 to 20 carbon atoms, X₇₁ represents an oxygen atom or -N(R₇₃)-, R₇₁ represents a hydrogen atom or a methyl group, R₇₂ represents a hydrocarbon group having from 4 to 30 carbon atoms, and R₇₃ represents a hydrogen atom or a hydrocarbon group having from 1 to 30 carbon atoms, provided that the hydrocarbon groups of R₅₂ and R₇₂ each may contain an ether bond, an amino group, a hydroxy group or a halogen substituent.

The above-described graft polymer can be obtained by polymerizing a radical polymerizable monomer corresponding to formula (3) preferably in the presence of a chain transfer agent, introducing a polymerizable functional group into the terminal of the polymer obtained, and copolymerizing the polymer with a radical polymerizable monomer corresponding to formula (1) or (2).

Examples of the radical polymerizable monomer corresponding to formula (1) include (meth)acrylic acid esters such as methyl (meth)acrylate, ethyl (meth)acrylate, propyl (meth) acrylate, butyl (meth)acrylate, hexyl (meth)-acrylate, cyclohexyl (meth)acrylate, phenyl (meth)acrylate, benzyl (meth)acrylate and 2-hydroxyethyl (meth)acrylate, and (meth)acrylamides such as N-methyl(meth)acrylamide, N-propyl(meth)acrylamide, N-phenyl(meth)acrylamide and N,N-dimethyl(math)acrylamide.

Examples of the radical polymerizable monomer corresponding to formula (2) include styrene, 4-methylstyrene, chlorostyrene and methoxystyrene.

Also, examples of the radical monomer corresponding to formula (2) include hexyl (meth)acrylate, octyl (meth)acrylate, 2-ethylhexyl (meth)acrylate, dodecyl (meth)acrylate and stearyl (meth)acrylate.

Specific examples of the graft polymer include polymers represented by the following structural formulae.

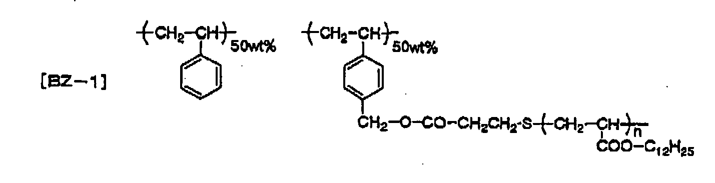

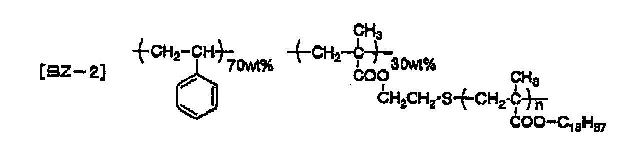

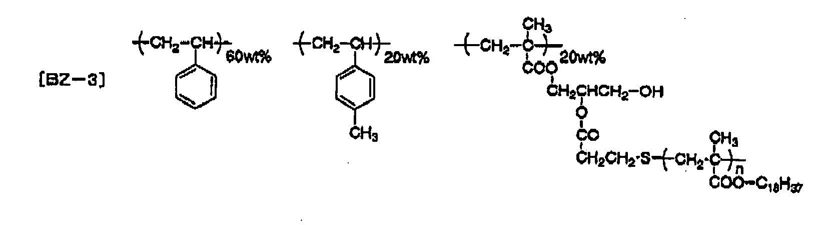

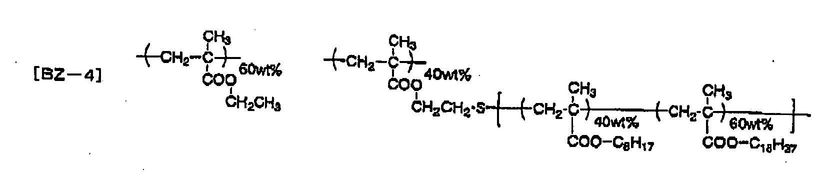

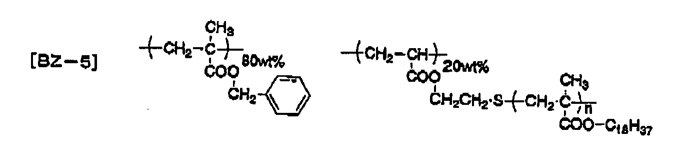

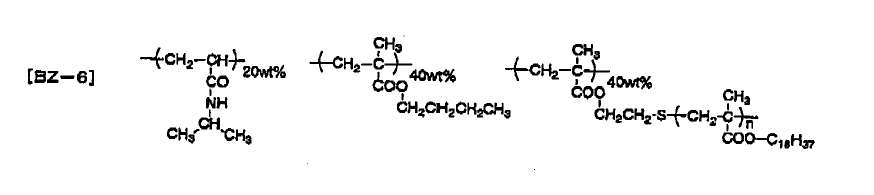

The graft polymer comprising a polymer component containing at least either one of the constituent units represented by formulae (1) and (2) and a polymer component containing a constituent unit represented by formula (3) at least as a graft chain may have only the constituent units represented by formula (1) and/or (2) and formula (3) or may contain another constituent component. The compositional ratio of the polymer component containing a graft chain and the polymer component other than that is preferably from 10:90 to 90:10. Within this range, good particle-forming property is obtained and particles having a desired diameter are advantageously obtained with ease. As the dispersant, these polymers may be used individually or in combination of two or more thereof.

The dispersant content is preferably from 0.01 to 30 mass% based on the entire ink composition. Within this range, good particle-forming property and particles having a desired diameter can be obtained.

### [Charge-Control Agent]

In the present invention, a mixture of the coloring material and the coating agent is preferably dispersed (formed into particles) in a dispersion medium by using a dispersant and for controlling the electric charge amount of the particle, it is more preferred to use a charge-control agent in combination.

Suitable examples of the charge-control agent include metal salts of organic carboxylic acid, such as zirconium naphthenate and zirconium octenate, ammonium salts of organic carboxylic acid, such as tetramethylammonium stearate, metal salts of organic sulfonic acid, such as sodium dodecylbenzenesulfonate and magnesium dioctylsulfosuccinate, ammonium salts of organic sulfonic acid, such as tetrabutylammonium toluenesulfonate, polymers having a carboxylic acid group in the side chain, such as carboxylic acid group-containing polymer obtained by modifying a copolymer of styrene and maleic anhydride with amine, polymers having a carboxylic acid anion group in the side chain, such as copolymer of stearyl methacrylate and tetramethylammonium salt of methacrylic acid, polymers having a nitrogen atom in the side chain, such as copolymer of styrene and vinylpyridine, and polymers having an ammonium group in the side chain, such as copolymer of butyl methacrylate and N-(2-methacryloyloxyethyl)-N,N,N-trimethylammonium tosylate. The electric charge imparted to the particle may be a positive charge or a negative charge. The content of the charge-control agent is preferably from 0.0001 to 10 mass% based on the entire ink composition. The electric conductivity of the ink composition of the present invention is preferably from 10 to 300 nS/m, and the electric conductivity of the charged particle is preferably 50% or more of the electric conductivity of the ink composition. These conditions can be easily adjusted by increasing or decreasing the content of the charge-control agent.

### [Other Components]

In the present invention, for example, an antiseptic for preventing putrefaction and a surfactant for controlling the surface tension can be further contained according to the purpose.

### [Preparation of Particle]

The ink composition containing particles of the present invention can be prepared by using these components and dispersing (particle-forming) the coloring material and the coating agent. Examples of the dispersing (particle-forming) method include the followings:
(1) a method where the coloring material and the coating agent are previously mixed and then dispersed (formed into particles) by using the dispersant and the dispersion medium and thereto, the charge-control agent is added,
(2) a method where the coloring material, the coating agent, the dispersant and the dispersion medium are simultaneously used and dispersed (formed into particles) and thereto, the charge-control agent is added, and
(3) a method where the colorinq material, the coating agent, the dispersant, the charge-control agent and the dispersion medium are simultaneously used and dispersed (formed into particles).

Examples of the device used for the mixing or dispersion include kneader, dissolver, mixer, high-speed disperser, sand mill, roll mill, ball mill, attritor and bead mill (see, Non-Patent Document 1, supra).

The volume average diameter of particles as used in the present invention can be measured, for example, by a centrifugal precipitation method using a device such as Ultracentrifugal Automatic Particle Analyzer CAPA-700 (manufactured by Horiba Ltd.). The average diameter includes a volume average diameter, a number average diameter and the like according to the calculation method, but in the present invention, the volume average diameter of particles is preferably from 0.7 to 3.0 µm, more preferably from 0.9 to 2.5 µm. When the volume average diameter is 0.7 µm or more, sufficient concentration of particles results and the ink recorded on a recording medium can be prevented from bleeding and when the volume average diameter is 3.0 µm or less, clogging at the head ejection port is less generated. The particle size distribution is preferably narrow and uniform.

The viscosity (20°C) of the ink composition of the present invention is preferably from 0.5 to 5 mPa·s. Within this range, a problem that the ink composition drips from the ink ejection port of the head or the ink droplet is not ejected is difficult to occur. The viscosity is more preferably from 0.8 to 4 mPa·s. The surface tension of the ink composition is preferably from 10 to 70 mN/m. Within this range, a problem that the ink composition drips from the ink ejection port of the head or the ink droplet is not ejected is difficult to occur. The surface tension is more preferably from 15 to 50 mN/m.

### [Inkjet Recording Apparatus]

In the present invention, the above-described ink composition is used for recording an image on a recording medium by an inkjet recording system. In the present invention, an inkjet recording system utilizing an electrostatic field is preferably employed. The inkjet recording system utilizing an electrostatic field is a system where a voltage is applied between a control electrode and a back electrode on the back surface of a recording medium, as a result, the charged particles in the ink composition are concentrated at the ejection site by the electrostatic force and flown to a recording medium from the ejection site. In applying a voltage between a control electrode and a back electrode, for example, when the charged particle is positive, the control electrode serves as the positive electrode and the back electrode serves as the negative electrode. The same effect can also be obtained by electrifying the recording medium instead of applying a voltage to the back electrode.

The ink flying system includes, for example, a system of flying an ink from a needle-like tip such as injection needle and in this system, recording can be performed by using the ink composition of the present invention. However, after charged particles are concentrated and ejected, refilling of charged particles is difficult and stable recording can be hardly performed for a long period of time. If the ink is circulated to enforcedly refill charged particles, the ink overflows from the injection needle-like tip and the meniscus shape at the injection needle-like tip as the ejection site is not stabilized, as a result, the recording cannot be stably performed. Therefore, this system is suitable for short-term recording.

On the other hand, a method of circulating an ink composition without causing the ink composition to overflow from the ejection opening is preferably used. For example, in a method of circulating an ink in an ink chamber having an ejection opening and applying a voltage to a control electrode formed in the periphery of the ejection opening to cause flying of a concentrated ink droplet from the tip of an ink guide present in the ejection opening, with the tip facing the recording medium side, both refilling of charged particles by the circulation of ink and meniscus stability of the ejection site can be attained and therefore, the recording can be stably performed for a long period of time. Furthermore, in this system, the portion of the ink coming into contact with an outside air is only the ejection opening and is very small, so that the solvent can be prevented from evaporation and the physical properties of ink can be stabilized. Therefore, this system can be suitably used in the present invention.

A constitution example of the inkjet recording apparatus to which the ink composition of the present invention is suitably applied is described below.

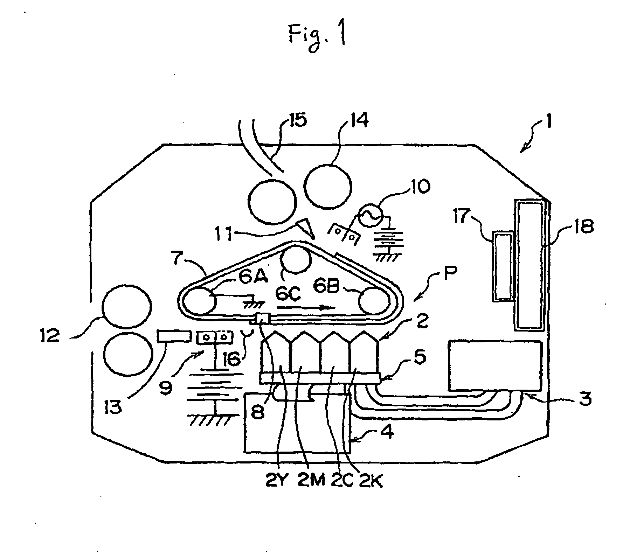

An apparatus of performing one-side four-color printing on a recording medium, shown in Fig. 1, is briefly described below.

The inkjet recording apparatus 1 shown in Fig. 1 comprises an ink circulating system 3 which supplies an ink to an ejection head 2 constituted by ejection heads 2C, 2M, 2Y and 2K of four colors for performing the formation of a full color image and further recovers the ink from the ejection head 2, a head driver 4 for driving the ejection head 2 by the output from an external device (not shown) such as computer and RIP, and position controlling means 5. Furthermore, the inkjet recording apparatus 1 comprises a conveyance belt 7 strained by three rollers 6A, 6B and 6C, conveyance belt position-detecting means 8 constituted by an optical sensor or the like capable of detecting the position in the cross direction of the conveyance belt 7, electrostatic adsorption means 9 for holding a recording medium P on the conveyance belt, and destaticizing means 10 and dynamic means 11 for separating the recording medium P from the conveyance 7 after the completion of image formation. Upstream and downstream the conveyance belt 7, a feed roller 12 and a guide 13 for feeding the recording medium P to the conveyance belt 7 from a stocker (not shown), and fixing means 14 and a guide 15 for fixing the ink on the recording medium P separated and at the same time, conveying the recording medium to a discharged paper stocker are disposed. Also, in the inside of the inkjet printing apparatus 1, recording medium position-detecting means 16 is provided at the position opposing the ejection head 2 through the conveyance belt 7 and a solvent recovery part for recovering solvent vapor generated from the ink composition, comprising an exhaust fan 17 and a solvent vapor adsorbent 18, is disposed so that the vapor inside the apparatus can be discharged outside the apparatus through the recovery part.

The feed roller 12 can be a known roller and is disposed to enhance the feeding ability for the recording medium. On the recording medium P, dirt, paper dust and the like are sometimes attached and these are preferably removed. The recording medium P fed by the feed roller is conveyed to the conveyance belt 7 through the guide 13. The back surface (preferably metal back surface) of the conveyance belt 7 is placed through a roller 6A. The recording medium conveyed is electrostatically adsorbed on the conveyance belt by the electrostatic adsorption means 9. In Fig. 1, the electrostatic adsorption is performed by a scorotron charger connected to a negative high voltage power source. By the electrostatic adsorption means 9, the recording medium 9 is electrostatically adsorbed on the conveyance belt 7 without floating and at the same time, the recording medium surface is uniformly electrified. In this example, the electrostatic adsorption means is used also as the electrification means for the recording medium, but the electrification means may be provided separately. The electrified recording medium P is conveyed to the ejection head part by the conveyance belt 7 and recording signal voltages are superposed while using the electrification potential as a bias, whereby an electrostatic inkjet image is formed. The recording medium P having formed thereon an image is destaticized by the destaticizing means 10, separated from the conveyance belt 7 by the dynamic means 11 and conveyed to the fixing part. The recording medium P separated is transferred to the image fixing means 14 and the image is fixed. The recording medium P after fixing is discharged to the discharged paper stocker (not shown) through the guide 15. This apparatus also has means for recovering solvent vapor generated from the ink composition. The recovery means comprises a solvent vapor absorbent 18 and the gas containing solvent vapor in the apparatus is introduced into the adsorbent by the exhaust fan 17 and after adsorbing and recovering the vapor, discharged outside the apparatus. The inkjet recording apparatus is not limited to this example, but the number, shape, relative disposition, charged polarity and the like of constituent devices such as roller and charger can be arbitrarily selected. Furthermore, the system is described here by referring to the drawing of a four-color image, but a system of drawing an image having more colors by using a light color ink or a special color ink in combination may be employed.

The inkjet recording apparatus for use in the above-described inkjet printing method comprises an ejection head 2 and an ink circulating system 3 and furthermore, the ink circulating system 3 has an ink tank, an ink circulating device, an ink concentration-controlling device, an ink temperature-controlling device and the like. In the ink tank, a stirring device may be contained.

The ejection head 2 may be a single channel head, a multi-channel head or a full line head, and the main scanning is performed by the rotation of a conveyance belt 7.

The inkjet head which is suitably used in the present invention performs an inkjet method of electrophoresing charged particles in the ink flow path to increase the ink concentration in the vicinity of the opening and ejecting an ink droplet, where the ink droplet is ejected by an electrostatic suction force mainly ascribable to the recording medium or the opposing electrode disposed on the back surface of the recording medium. Therefore, in the case where the recording medium or opposing electrode is not facing the head or even if facing the head, a voltage is not applied to the recording medium or opposing electrode, an ink droplet is not ejected even when a voltage is applied by mistake to the ejection electrode or vibration is applied, and the inside of the apparatus is not stained.

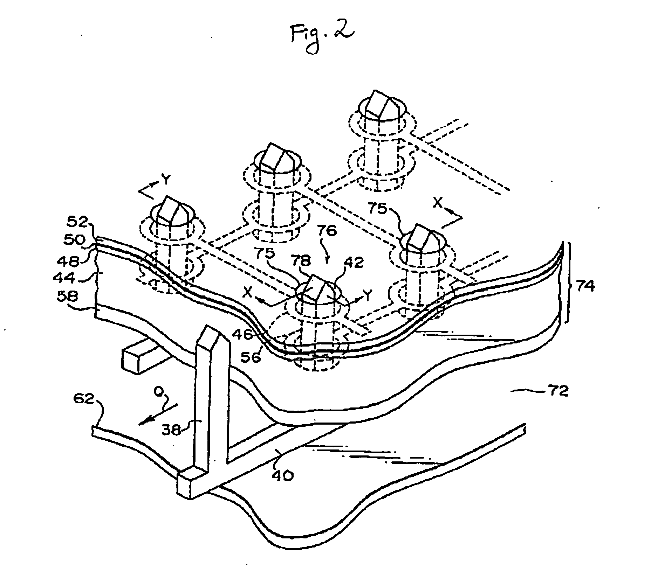

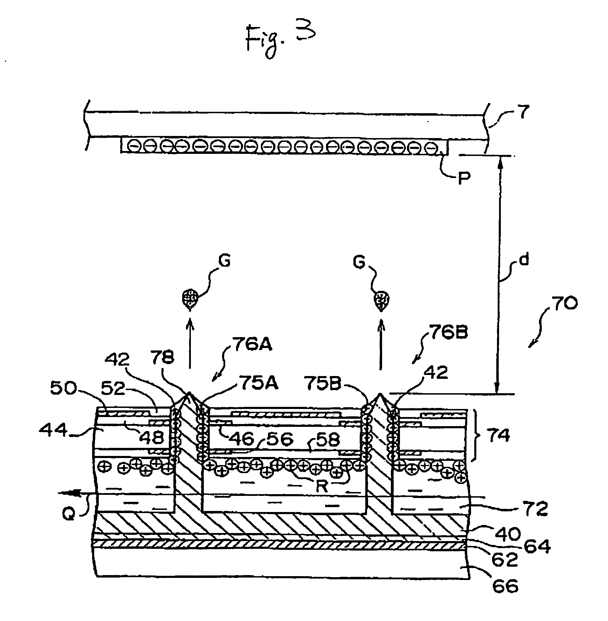

Figs. 2 and 3 show an ejection head which is suitably used for the above-described inkjet apparatus. As shown in Figs. 2 and 3, the inkjet head 70 comprises an electrically insulating substrate 74 constituting the top wall of an ink flow path 72 where a one-way ink flow Q is formed, and a plurality of ejection parts 76 for ejecting an ink toward a recording medium P. In all of the ejection parts 76, an ink guide part 78 for guiding an ink droplet G flown from the ink flow path 72 toward the recording medium P is provided. In the substrate 74, openings 75 each allowing for penetration of the ink guide part 78 are formed and an ink meniscus 42 is formed between the ink guide part 78 and the inner wall surface of the opening 75. The gap d between the ink guide part 78 and the recording medium P is preferably on the order of 200 to 1,000 µm. The ink guide part 78 is fixed at its lower end side to a supporting rod part 40.

The substrate 74 has an insulating layer 44 for separating two ejection electrodes at a predetermined distance and thereby establishing electrical insulation, a first ejection electrode 46 formed on the top side of the insulating layer 44, an insulating layer 48 covering the first ejection electrode 46, a guard electrode 50 formed on the top side of the insulating layer 48, and an insulating layer 52 covering the guard electrode 50. Furthermore, the substrate 74 has a second ejection electrode 56 formed on the bottom side of the insulating layer 44 and an insulating layer 58 covering the second ejection electrode 56. The guard electrode 50 is provided for preventing adjacent ejection parts from being affected in view of electric field by the voltage applied to the first ejection electrode 46 or the second ejection electrode 56.

Furthermore, the inkjet head 70 comprises a floating conductive plate 62 provided in the electrically floating state to constitute the bottom surface of the ink flow path 72 and at the same time, drift positively charged ink particles (charged particles) R in the ink flow path 72 toward the upper side (namely, toward the recording medium side) by using an induced voltage constantly generated due to the pulsed ejection voltage applied to the first ejection electrode 46 and the second ejection electrode 56. On the surface of the floating conductive plate 62, an electrically insulating cover film 64 is formed to prevent the ink from becoming unstable in the physical properties or components as a result of, for example, injection of electric charge into the ink. The electric resistance of the insulating cover film is preferably 10¹² Ω·cm or more, more preferably 10¹³ Ω·cm or more. Also, the insulating cover film is preferably corrosion-resistant against ink so as to prevent the floating conductive plate 62 from corroding by the ink. The bottom side of the floating electrically conducing plate 62 is covered by an insulating member 66 and by virtue of such a constitution, the floating conductive plate 62 is completely in an electrically insulated state.

One or more floating conductive plate 62 is provided per one head unit (for example, when C, M, Y and K four heads are present, each head has at least one floating conductive plate and a floating conductive plate is not commonly used between C and M head units).

For flying an ink from the inkjet head 70 as shown in Fig. 3 to record an image on the recording medium P, an ink flow Q is generated by circulating the ink in the ink flow path 72 and in this state, a predetermined voltage (for example, +100 V) is applied to the guard electrode 50. Also, a positive voltage is applied to the first ejection electrode 46, the second ejection electrode 56 and the recording medium P such that a flying electric field high enough to cause positively charged particles R in the ink droplet G guided by the ink guide part 78 and flown from the opening 75 to gravitate to the recording medium P is formed between the first ejection electrode 46 and the recording medium P and between the second ejection electrode 56 and the recording medium P (as a standard, to form a potential difference of approximately from 1 to 3.0 kV when the gap d is 500 µm).

In this state, when a pulse voltage is applied to the first ejection electrode 46 and the second ejection electrode 56 according to image signals, the ink droplet G elevated in the charged particle concentration is ejected from the opening 75 (for example, when the initial concentration of charged particles is from 3 to 15%, the charged particle concentration in the ink droplet G becomes 30% or more).

At this time, the voltage value applied to the first ejection electrode 46 and the second ejection electrode 56 is adjusted such that the ink droplet G is ejected only when a pulse voltage is applied to both the first ejection electrode 46 and the second ejection electrode 56.

In this way, when a pulsed positive voltage is applied, the ink droplet G guided by the ink guide part 78 is flown from the opening 75 and attached to the recording medium P and at the same time, a positive induced voltage is generated in the floating conductive plate 62 due to the positive voltage applied to the first ejection electrode 46 and the second ejection electrode 56.

Even when the voltage applied to the first ejection electrode 46 and the second ejection electrode 56 is pulsed, the induced voltage is nearly a stationary voltage. Accordingly, the charged particles R positively charged in the ink flow path 72 are moved upward by the force of the electric field formed between the floating conductive plate 62 and the recording medium P and between the guard electrode 50 and the recording medium P, and the concentration of charged particles R increases in the vicinity of the substrate 74.

As shown in Fig. 3, when a large number of ejection parts (that is, channels for ejecting an ink droplet) are used, the number of charged particles necessary for the ejection becomes large, but since the first ejection electrode 46 and the second ejection electrode 56 each is increased in the number of sheets used, the induced voltage generated in the floating conductive plate 62 is elevated and the number of charged particles R moving to the recording medium side increases.

In the example described above, the color particle is positively charged, but the color particle may be negatively charged and in this case, the charged polarities all are reversed.

In the present invention, the ink ejected on a recording medium is preferably fixed by appropriate heating means. Examples of the heating means which can be used include contact-type heating devices such as heat roller, heat block and belt heating, and non-contact type heating devices such as drier, infrared lamp, visible light lamp, ultraviolet lamp and hot air-type oven. Such a heating device is preferably continued to and integrated with the inkjet recording apparatus. The temperature of the recording medium at the fixing is preferably from 40 to 200°C in view of easiness of fixing. The fixing time is preferably from 1 micro-second to 20 seconds.

### [Replenishment of Ink Composition]

In the inkjet recording system utilizing an electrostatic field, the charged particles in the ink composition are concentrated and ejected. Accordingly, when the ink composition is ejected for a long period of time, the amount of charged particles in the ink composition decreases and the electric conductivity of the ink composition decreases. Also, the ratio between the electric conductivity of the charged particle and the electric conductivity of the ink composition changes. Furthermore, at the ejection, a charged particle having a large diameter tends to be more preferentially ejected than a charged particle having a small diameter and therefore, the average diameter of charged particles decreases. In addition, the content of solid matters in the ink composition changes and therefore, the viscosity also changes.

As a result of these changes in the physical values, ejection failure may occur, the optical density of recorded image may decrease or the bleeding of ink may be generated. To cope with this, an ink composition having a higher concentration (the concentration of solid contents is higher) than the ink composition initially charged into the ink tank is replenished, whereby the amount of charged particles can be prevented from decreasing and the electric conductivity of the ink composition and the ratio of the electric conductivity of the charged particle to the electric conductivity of the ink composition can be kept constant. Also, the average particle diameter and the viscosity can be maintained. Furthermore, by keeping constant the physical values of the ink composition, the ink is stably and uniformly ejected for a long period of time. The replenishment at this time is preferably performed mechanically or manually, for example, by detecting the physical values of the ink solution on use, such as electric conductivity and optical density, and calculating the shortfall. Also, the replenishment may be performed mechanically or manually by calculating the amount of the ink composition used, based on the image data.

### [Recording Medium]

In the present invention, various recording mediums can be used according to uses. For example, when paper, plastic film, metal, paper laminated or vapor-deposited with plastic or metal, or plastic film laminated or vapor-deposited with metal is used, a printed matter can be directly obtained by the inkjet recording. Also, for example, when a support obtained by roughening the surface of a metal such as aluminum is used, an offset printing plate can be obtained.

Furthermore, when a plastic support or the like is used, a color filter for flexographic printing plate or liquid crystal screen can be obtained. The recording medium may have a planar shape such as sheet form or may have a steric shape such as cylindrical form. When a silicon wafer or a circuit board is used as the recording medium, this can be applied to the production of a semiconductor or a printed circuit board.

By combining the above-described ink composition, inkjet recording apparatus and replenishment of ink composition, an image-recorded material free from bleeding of ink and having high image density and high image quality can be stably obtained over a long period of time.

### Examples

The present invention is described in greater detail below by referring to Examples, but the present invention is not limited thereto.

### Synthesis Example [Synthesis of Coating Agent (AP-1)]:

In a 500 ml-volume three-neck flask containing 46.6 g of 1-methoxy-2-propanol (MFG), a mixed solvent consisting of 55 g (0.549 mol) of methyl methacrylate, 40 g (0.057 mol) of Pluxel FM5 (Mw: 700, Tm: 21°C) [produced by Daicel Chemical Industries, Ltd.], 5 g (0.0146 mol) of Monomer (M-1), 2.858 g (12.41 mmol) of dimethyl 2,2'-azobis(2-methylpropionate) (V-601, produced by Wako Pure Chemical Industries, Ltd.) and 186.4 g of MFG was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 91 g of Polymer (AP-1). The weight average molecular weight was 47,000 and the polydispersion degree (weight average molecular weight/number average molecular weight) was 2.5.
(Pluxel FM5: terminal polymerizable group-containing polyester macromonomer):

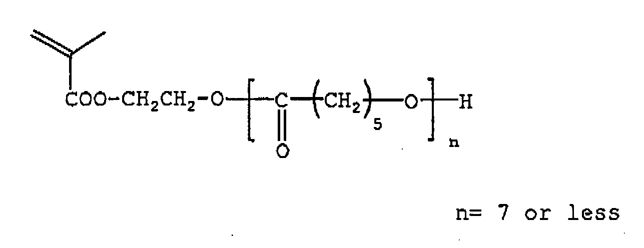

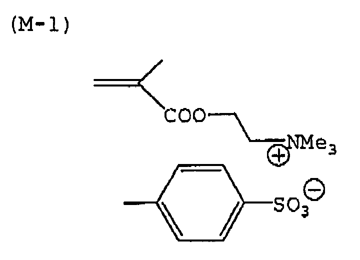

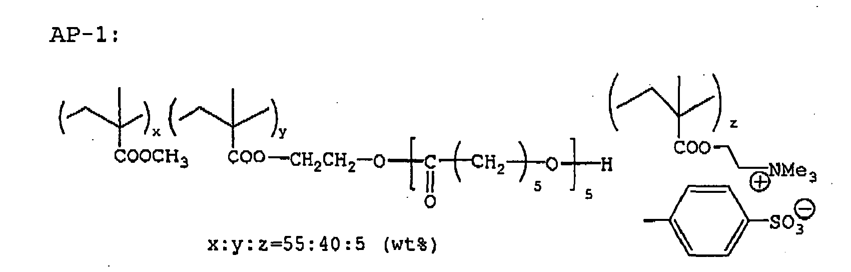

### [Coating Agent (AP-2)]

### (Synthesis of Polyester)

In a three-neck flask, 141.6 g (0.7 mol) of sebacic acid, 122.0 g (0.7 mol) of 1,10-decanediol, 1.33 g (7.0 mmol) of para-toluenesulfonic acid monohydrate and 322 g (45 mass%) of xylene were charged and subjected to dehydrating condensation at 180 to 190°C for 4 hours. The obtained condensate was reprecipitated with methanol and then vacuum-dried to obtain 230.5 g of Polyester (P-1) having a weight average molecular weight Mw of 32,000 and Tm of 80°C.

### (Synthesis of Main Chain Polymer)

In a 500 ml-volume three-neck flask containing 46.6 g of 1-methoxy-2-propanol (MFG), a mixed solvent consisting of 70 g (0.699 mol) of methyl methacrylate, 30 g (0.211 mol) of glycidyl methacrylate, 4.19 g (18.2 mmol) of dimethyl 2,2'-azobis(2-methylpropionate) (V-601, produced by Wako Pure Chemical Industries, Ltd.) and 186.4 g of MFG was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 93 g of Main Chain Polymer (P-2). The weight average molecular weight was 33,000 and the polydispersion degree (weight average molecular weight/number average molecular weight) was 1.9.

In a Kjeldahl flask, 50 g of Main Chain Polymer (P-2), 33.3 g of Polyester (P-1) and 83.3 g of THF were charged and reacted for 10 hours under reflux. The reaction product was reprecipitated with water and vacuum-dried to obtain Polymer (AP-2) having Polyester (P-1) in the side chain. The weight average molecular weight was 97,000.

### [Coating Agent (AP-3)]

In a 500 ml-volume three-neck flask containing 46.6 g of 1-methoxy-2-propanol (MFG), a mixed solvent consisting of 70 g (0.699 mol) of methyl methacrylate, 20 g (0.154 mol) of hydroxy methacrylate, 10 g (0.0295 mol) of stearyl methacrylate, 4.06 g (17.65 mmol) of dimethyl 2,2'-azobis(2-methylpropionate) (V-601, produced by wako Pure Chemical Industries, Ltd.) and 186.4 g of MFG was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 94.3 g of Main Chain Polymer (P-3). The weight average molecular weight was 32,000 and the polydispersion degree (weight average molecular weight/number average molecular weight) was 1.67.

Dimethyl acetamide and dibutyltin dilaurate were mixed with 100 g in total of Main Chain Polymer (P-3)/ε-caprolactone=1/1.75 (by mass), and the mixture was stirred under heating at 160°C for 8 hours and then reprecipitated with water to obtain Coating Agent (AP-3). The weight average molecular weight was 45,000.

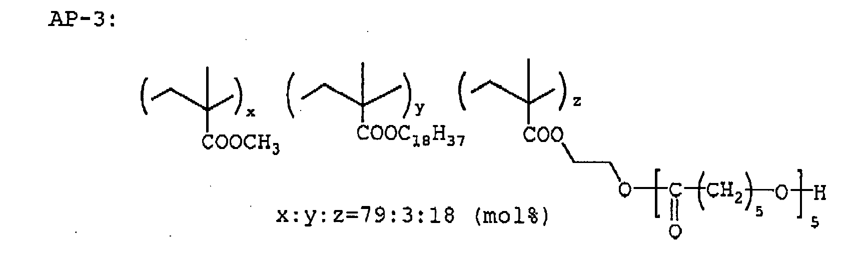

### [Synthesis of Coating Agent (AP-4)]

In a 500 ml-volume three-neck flask containing 46.6 g of 1-methoxy-2-propanol (MFG), a mixed solvent consisting of 75 g (0.749 mol) of methyl methacrylate, 25 g (0.0738 mol) of stearyl methacrylate, 9.47 g (41.14 mmol) of 4,4'-azobis(4-cyanovaleric acid) (V-501, produced by Wako Pure Chemical Industries, Ltd.) and 186.4 g of MFG was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 91 g of Polymer (P-4) having a terminal carboxylic acid group. The weight average molecular weight was 15,000 and the polydispersion degree (weight average molecular weight/number average molecular weight) was 2.4.

In THF containing 30 g of Polymer (P-4) having a terminal carboxylic acid group and Polyester (P-1) (Mw: 32,000, Tm: 80°C) obtained in the synthesis of Coating Agent (AP-2) above, 0.413 g of 1,2-dicyclohexylcarbodiimide and a catalytic amount of N,N-dimethylaminopyridine were added and a condensation reaction was performed at 40°C. The condensate was filtered through Celite and then reprecipitated with water to obtain Coating Agent (AP-4). The weight average molecular weight was 50,000.

### [Synthesis of Coating Agent (AP-5)].

In a 500 ml-volume three-neck flask containing 46.6 g of 1-methoxy-2-propanol (MFG), a mixed solvent consisting of 75 g (0.657 mol) of ethyl methacrylate,. 20 g (0.0285 mol) of Pluxel FM5 (Mw: 700, Tm: 21°C) [produced by Daicel Chemical Industries, Ltd.], 5 g (0.0146 mol) of Monomer (M-1), 3.22 g (14.02 mmol) of dimethyl-2,2'-azobis(2-methylpropionate) (V-601, produced by Wako Pure Chemical Industries, Ltd.), 184.4 g of MFG and 2 g of water was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 88 g of Polymer (AP-5). The weight average molecular weight was 36,000 and the polydispersion degree (weight average molecular weight/number average molecular weight) was 2.1.

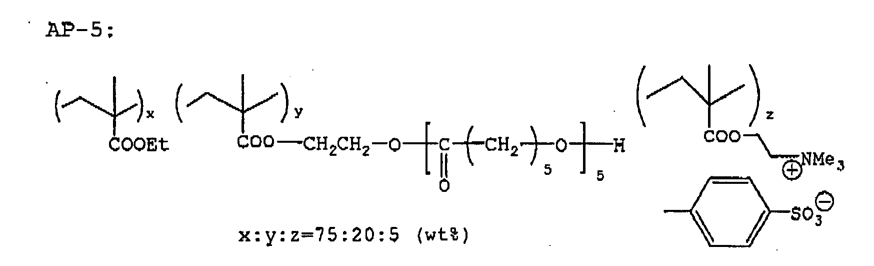

### [Example 1]

### <Materials Used>

In Example 1, the following materials were used.
Cyan pigment (coloring material):
   phthalocyanine pigment C.I. Pigment Blue (15:3) (Lionol Blue FG-7350, produced by Toyo Ink Mfg. Co., Ltd.)
Coating agent:
   [Coating Agent AP-1, see Synthesis Example 1 above]
Dispersant: [BZ-2]
Charge-control agent: [CT-1]
Dispersion medium: Isoper G (produced by Exxon Corp.)

The structures of Dispersant [BZ-2] and Charge-Control Agent [CT-1] are shown below.

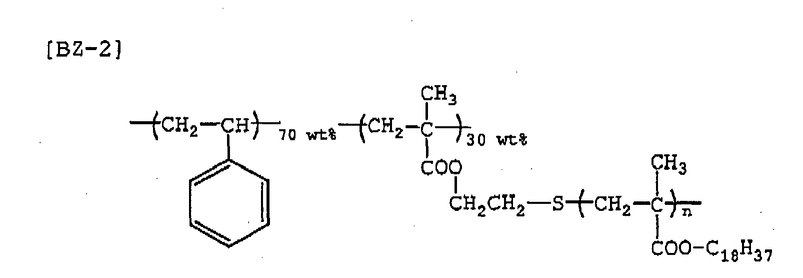

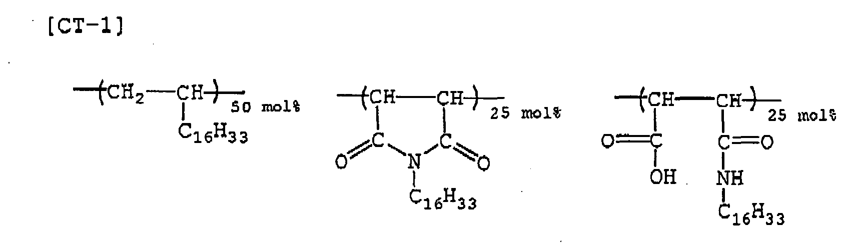

Dispersant [BZ-2] was obtained by radical-polymerizing stearyl methacrylate in the presence of 2-mercaptoethanol, reacting the resulting polymer with methacrylic acid anhydride to obtain a polymer (weight averaae molecular weiqht: 7,600) of stearyl methacrylate having a methacryloyl group at the terminal, and then radical-polymerizing this polymer with styrene. The weight average molecular weight was 110,000.

Charge-Control Agent [CT-1] was obtained by reacting 1-hexadecylamine with a copolymer of 1-octadecene and maleic anhydride. The weight average molecular weight was 17,000.

### <Preparation of Ink Composition (EC-1)>

A cyan pigment (10 g) and 20 g of Coating Agent [AP-1) were charged into a desktop kneader PBV-0.1 manufactured by Irie Shokai K.K. and mixed under heating for 2 hours by setting the heater temperature to 100°C. Then, 30 g of the obtained mixture was coarsely ground by Trio Blender manufactured by Trio Science K.K. and further finely ground by Model SKM-10 Sample Mill manufactured by Kyoritsu Riko K.K. Thereafter, 30 g of the resultant finely ground material was pre-dispersed together with 7.5 g of Dispersant [BZ-2], 75 g of Isoper G and glass beads having a diameter of about 3.0 mm in a paint shaker manufactured by Toyo Seiki Seisaku-Sho, Ltd. After removing glass beads, the pre-dispersion was dispersed (formed into particles) together with zirconia ceramic beads having a diameter of about 0.6 mm in Type KDL Dynomill manufactured by Shinmaru Enterprise K.K. at a rotation number of 2,000 rpm for 5 hours while keeping the inner temperature at 25°C and for another 5 hours at 45°C. After removing zirconia ceramic beads, 316 g of Isoper G and 0.6 g of Charge-Control Agent [CT-1] were added to the resultant dispersion to obtain Ink Composition [EC-1].

### <Inkjet Recording>

Ink Composition [EC-1] prepared in Example 1 was filled in the ink tank of the inkjet recording apparatus shown in Figs. 1 to 3. The ejection head used here was a 150-dpi (stagger arrangement in three arrays with a channel density of 50 dpi) 833-channel head of the type shown in Fig. 2, and the fixing means used was a silicon rubber-made heat roller self-containing a heater of 1 kW. As the ink temperature-controlling means, an immersion heater and a stirring blade were provided in the ink tank, the ink temperature was set to 30°C and the temperature was controlled by a thermostat while rotating the stirring blade at 30 rpm. The stirring blade was used here to serve also as the stirring means for preventing precipitation and aggregation. A part of the ink flow path was made transparent, and an LED light-emitting device and a light-detecting device were disposed to sandwich the transparent portion. Based on the output signal therefrom, the concentration was controlled by charging a diluting solution (Isoper G) for ink or a concentrated ink (prepared by adjusting the solid concentration of the ink composition prepared above to a 2-fold concentration). The recording medium used was a slightly coated paper sheet for offset printing. After removing dusts on the surface of the recording medium by air pump suction, the ejection head was approximated to the recording medium until the image-forming position. Then, the image data to be recorded were transmitted to the image data arithmetic and control part and the ink composition was ejected by sequentially moving the ejection head while conveying the recording medium by the rotation of the conveyance belt, thereby forming an image with an image drawing resolution of 2,400 dpi. The conveyance belt used here was obtained by laminating a metal belt and a polyimide film. In the vicinity of one edge of this belt, a linear marker was disposed along the conveyance direction and while optically reading this marker by the conveyance belt position-detecting means and driving the position-controlling means, the image was formed.

At this time, the distance between the ejection head and the recording medium was kept to 0.5 mm according to the output from an optical gap-detecting device. The surface potential of the recording medium at the ejection was set to -1.5 kV and in performing the ejection, a pulse voltage of +500 V was applied (pulse width: 50 µsec) and the image was formed at a driving frequency of 15 kHz.

On the gray scale image-recorded material (printed matter) obtained, streaked unevenness or bleeding of ink was not observed and a very clear image was formed. Also, image formation failure and the like were not generated at all and the image was completely free from deterioration due to change in the dot size or the like even when the ambient temperature was changed or the recording time was increased. Thus, good image formation could be performed.

### <Evaluation of Fixing>

Immediately after the recording, the image was fixed by using a heat roller. The fixing was performed by changing the temperature of the coated paper at the fixing in 5°C steps until 60 to 100°C and evaluated based on the temperature of causing the coating agent to flow (flow initiation temperature) and the maximum temperature of bringing about no offset to the heat roller (maximum offset resistance temperature).

That is, an ink reaching the flow initiation temperature at a low temperature and not causing offset until a high temperature is preferred. The term "flow" as used herein means a state where the coating agent is melted, flowed and then film-formed.

The results are shown in Table 1.

### Flow Initiation Temperature:

An SEM photograph of the image surface after fixing was observed and evaluated with an eye.

### Maximum Offset Resistance Temperature:

The offsetted image was again transferred to paper from the heat roller, and the generation of offset to the heat roller was evaluated by the image on the paper.

As for the blocking property of the printed image, the same paper as the printing paper sheet was superposed on the image fixed at a temperature high enough to satisfy the fixing property and left standing at 50°C for 24 hours while applying a mass of about 50 g/cm², and the degree of transfer of the image area to the superposed paper was evaluated with an eye.

The flow initiation temperature and the maximum offset resistance temperature were measured also in the state where the solvent was remaining on the recording medium (coated paper), and the fixing property was evaluated.

### <Measurement of Dynamic Modulus>

A finely ground product (3 g) of the sample was set in the sample chamber of a rheometer "Model Rheosol-G1000" manufactured by UBM and according to the predetermined measuring method, the sample was melted at 200°C, then the rotors are vibrated at a frequency of 1 Hz while dropping the temperature, and the dynamic modulus at 100°C and 50°C was read by automatically recording the "temperature-dynamic modulus curve".

Also, it was confirmed that the "temperature-dynamic modulus curve" has two inflection points at least in the temperature range from 40 to 100°C.

### [Examples 2 to 5] '

Inks [EC-2] to [EC-5] were 'prepared in the same manner as in Example 1 by using thoroughly the same materials except that out of the materials used, Coating Agent [AP-1] was changed to Coating Agents [AP-2] to [AP-5], respectively.

### [Example 6]

Ink [EC-6] was prepared in the same manner as in Example 1 by using thoroughly the same materials except that out of the materials used, 20 g of Coating Agent [AP-1] in Example 1 was changed to 18 g of [AP-1] and 2 g of biphenyl (produced by Wako Pure Chemical Industries, Ltd., Tm: 70°C).

### [Example 7]

Ink [EC-7] was prepared in the same manner as in Example 1 by using thoroughly the same materials except that out of the materials used, Coating Agent [AP-1] in Example 1 was changed to 18 g of [AP-5] and 2 g of vylon 220 (produced by Toyobo Co., Ltd., Tm: 80°C).

### [Comparative Example 1]

Ink Composition [RC-1] was prepared in the same manner as in Example 1 except that Coating Agent [AP-1] in Example 1 was changed to a comparative polymer, that is, polymethyl methacrylate (Mw: 15,000) [produced by Aldrich] [BP-1], and evaluated on the inkjet image drawing and fixing.

### [Comparative Example 2]

Ink Composition [RC-2] was prepared in the same manner as in Example 1 except that Coating Agent [AP-1] in Example 1 was changed to a comparative copolymer, that is, benzyl methacrylate/methyl methacrylate (molar ratio: 75/25, produced by Aldrich) [BP-2], and evaluated on the inkjet image drawing and fixing.

The evaluation results of Examples 1 to 7 and Comparative Examples 1 and 2 are shown in Table 1.

**Table 1**

| | Coating Agent Polymer | Ink Composition | Fixing Property | Blocking Resistance | Fixing Property (when solvent was remaining) |
|---|---|---|---|---|---|
| Example 1 | AP-1 | EC-1 | ○ | ○ | ○ |
| Example 2 | AP-2 | EC-2 | ○ | ○ | ○ |
| Example 3 | AP-3 | EC-3 | ○ | ○ | ○ |
| Example 4 | AP-4 | EC-4 | ○ | ○ | ○ |
| Example 5 | AP-5 | EC-5 | ○ | ○ | ○ |
| Example 6 | AP-1 | EC-6 | ○ | ○ | ○ |
| Example 7 | AP-5 | EC-7 | ○ | ○ | ○ |
| Comparative Example 1 | BP-1 | RC-1 | × | × | × |
| Comparative Example 2 | BP-2 | RC-2 | Δ | × | × |

### (Evaluation of Fixing Property)

- ○:: The flow initiation temperature was 70°C or less and the maximum offset resistance temperature was 80°C or more.
- Δ:: The flow initiation temperature was from 75°C to less than 80°C and the maximum offset resistance temperature was 80°C or more.
- ×:: The flow initiation temperature was 80°C or less, or the maximum offset resistance temperature was less than 80°C.

### (Evaluation of Blocking Resistance)

- ○:: Not transferred.
- Δ:: Slightly transferred.
- ×:: Significantly transferred.

As apparent from Table 1, in samples of the present invention using a polymer having a specific structure as the coating agent, melting can sharply occur and also, good blocking resistance and good offset resistance are attained as compared with samples of Comparative Examples using a comparative polymer.

### Example 8:

### <Materials Used>

In Example 8, the following materials were used.
Cyan pigment (coloring material):
   phthalocyanine pigment C.I. Pigment Blue (15:3) (Lionol Blue FG-7350, produced by Toyo Ink Mfg. Co., Ltd.)
Coating agent: [Coating Agent Polymer AP-6, see below]
Dispersant: [BZ-2]
Charge-control agent: [CT-1]
Dispersion medium: Isoper G (produced by Exxon Corp.)

The structures of Dispersant [BZ-2] and Charge-Control Agent [CT-1] are shown below.

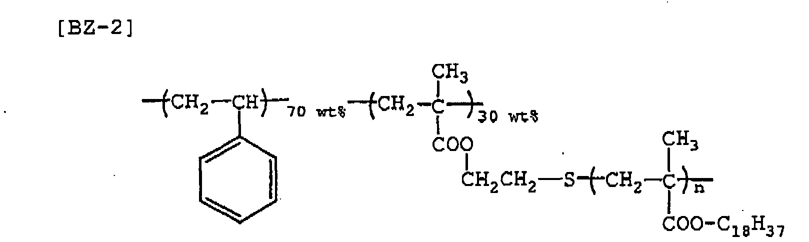

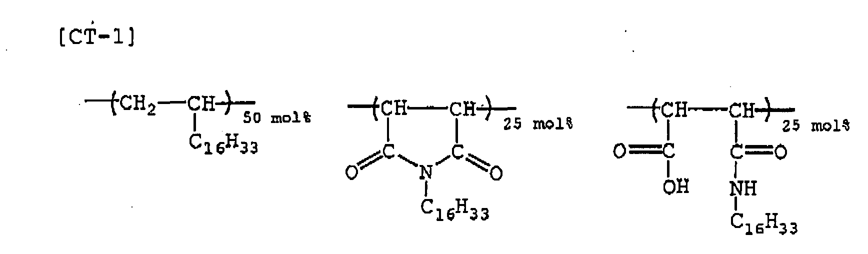

### Synthesis of Coating Agent Polymer:

### [Synthesis of Coating Agent (AP-6))

In a 500 ml-volume three-neck flask containing 46.6 g of 1-methoxy-2-propanol (MFG), a mixed solvent consisting of 60 g (0.526 mol) of ethyl methacrylate, 35 g (0.0916 mol) of Liquid Crystalline Group-Containing Monomer (M-2), 5 g (0.0146 mol) of Monomer (M-1), 0.985 g (4.28 mmol) of dimethyl 2,2'-azobis(2-methylpropionate) (V-601, produced by Wako Pure Chemical Industries, Ltd.) and 186.4 g of MFG was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 91 g of Polymer (AP-6) having a structure shown below. The weight average molecular weight Mw was 57,000 and the polydispersion degree (Mw/Mn) was 3.2.

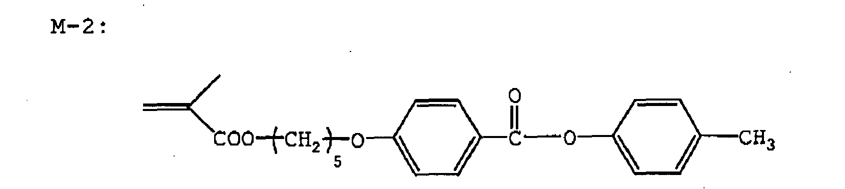

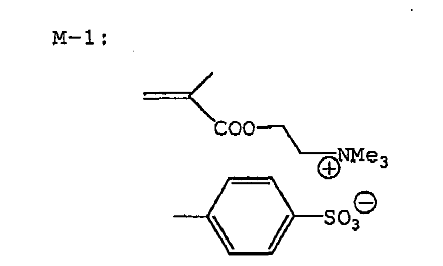

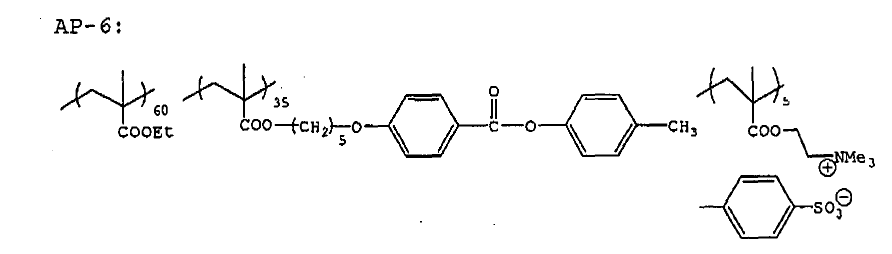

### [Synthesis of Coating Agent (AP-7)]

In a 500 ml-volume three-neck flask containing 46.6 g of 1-methoxy-2-propanol (MFG), a mixed solvent consisting of 60 g (0.599 mol) of methyl methacrylate, 35 g (0.083 mol) of Liquid Crystalline Group-Containing Monomer (M-3), 5 g (0.0146 mol) of Monomer (M-2), 0.802 g (3.48 mmol) of dimethyl 2,2'-azobis(2-methylpropionate) (V-601, produced by Wako Pure Chemical Industries, Ltd.) and 186.4 g of MFG was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 94 g of Polymer (AP-7) having a structure shown below. The weight average molecular weight Mw was 44,000 and the polydispersion degree (Mw/Mn) was 2.2.

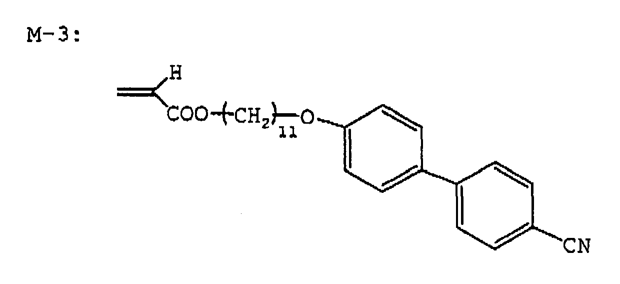

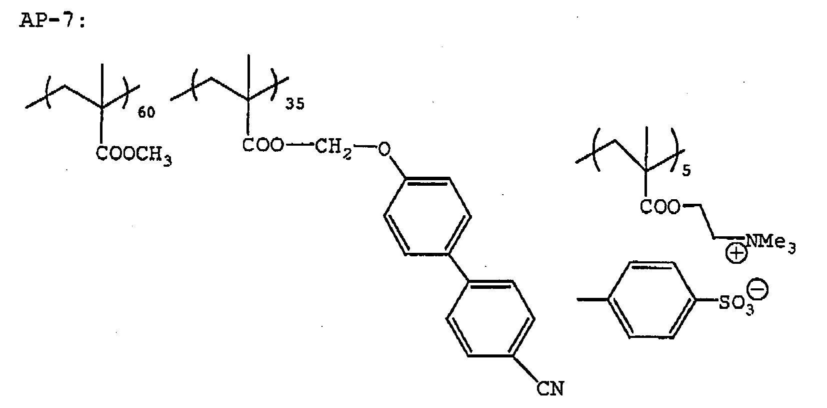

Dispersant [B2-2] was obtained by radical-polymerizing stearyl methacrylate in the presence of 2-mercaptoethanol, reacting the resulting polymer with methacrylic acid anhydride to obtain a polymer (weight average molecular weight: 7,600) of stearyl methacrylate having a methacryloyl group at the terminal, and then radical-polymerizing this polymer with styrene. The weight average molecular weight was 110,000.

Charge-Control Agent [CT-1] was obtained by reacting 1-hexadecylamine with a copolymer of 1-octadecene and maleic anhydride. The weight average molecular weight was 17,000.

### [Synthesis of Coating Agent (AP-8)]

In a 500 ml-volume three-neck flask containing 46.6 g of 1-methoxy-2-propanol (MFG), 30 g (0.300 mol) of methyl methacrylate, 10 g (0.0295 mol) of stearyl methacrylate, 40 g (0.057 mol) of Pluxel FM5 (Mw: 700, Tm: 21°C) [produced by Daicel Chemical Industries, Ltd.], 30 g (0.071 mol) of Monomer (M-3), 2.04 g (8.86 mmol) of dimethyl 2,2'-azobis(2-methylpropionate) (V-601, produced by Wako Pure' Chemical Industries, Ltd.) and 186.4 g of MFG was added dropwise at 80°C over 2.5 hours in a nitrogen atmosphere. After the reaction for another 2.5 hours, the temperature was elevated to 90°C and the reaction was then allowed to proceed for 2 hours. The obtained reaction solution was reprecipitated with water and vacuum-dried to obtain 90 g of Polymer (AP-8) having a structure shown below. The weight average molecular weight Mw was 42,000 and the polydispersion degree (Mw/Mn) was 2.8.

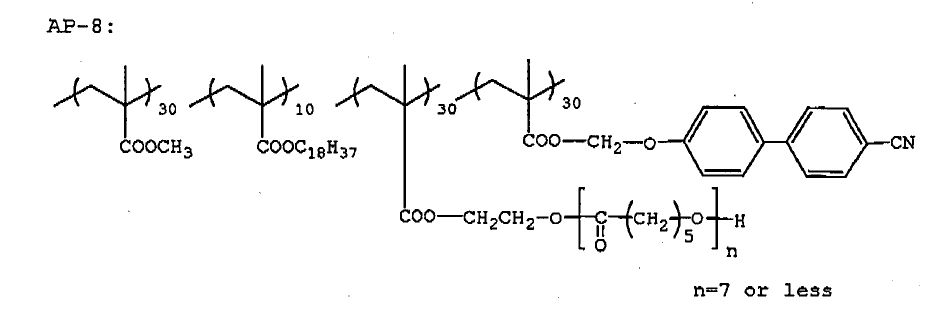

### <Preparation of Ink Composition [EC-8]>

A cyan pigment (10 g) and 20 g of Coating Agent [AP-6] were charged into a desktop kneader PBV-0.1 manufactured by Irie Shokai K.K. and mixed under heat for 2 hours by setting the heater temperature to 100°C. Then, 30 g of the obtained mixture was coarsely ground by Trio Blender manufactured by Trio Science K.K. and further finely ground by Model SK-M10 Sample Mill manufactured by Kyoritsu Riko K.K. Thereafter, 30 g of the resultant finely ground material was pre-dispersed together with 7.5 g of Dispersant [BZ-2], 75 g of Isoper G and glass beads having a diameter of about 3.0 mm in a paint shaker manufactured by Toyo Seiki Seisaku-Sho, Ltd. After removing glass beads, the pre-dispersion was dispersed (formed into particles) together with zirconia ceramic beads having a diameter of about 0.6 mm in Type KDL Dynomill manufactured by Shinmaru Enterprise K.K. at a rotation number of 2,000 rpm for 5 hours while keeping the inner temperature at 25°C and for another 5 hours at 45°C. After removing zirconia ceramic beads, 316 g of Isoper G and 0.6 g of Charge-Control Agent [CT-1] were added to the resultant dispersion to obtain Ink Composition [EC-8].

### <Inkjet Recording>

Ink Composition [EC-8] of Example 8 was filled in the ink tank of the inkjet recording apparatus shown in Figs. 1 to 3. The ejection head used here was a 150-dpi (stagger arrangement in three arrays with a channel density of 50 dpi) 833-channel head of the type shown in Fig. 2 and the fixing means used was a silicon rubber-made heat roller self-containing a heater of 1 kW. As the ink temperature-controlling means, an immersion heater and a stirring blade were provided in the ink tank, the ink temperature was set to 30°C and the temperature was controlled by a thermostat while rotating the stirring blade at 30 rpm. The stirring blade was used here to serve also as the stirring means for preventing precipitation and aggregation. A part of the ink flow path was made transparent, and an LED light-emitting device and a light-detecting device were disposed to sandwich the transparent portion. Based on the output signal therefrom, the concentration was controlled by charging a diluting solution (Isoper G) for ink or a concentrated ink (prepared by adjusting the solid concentration of the ink composition prepared above to a 2-fold concentration). The recording medium used was a slightly coated paper sheet for offset printing. After removing dusts on the surface of the recording medium by air pump suction, the ejection head was approximated to the recording medium until the image-forming position. Then, the image data to be recorded were transmitted to the image data arithmetic and control part and the ink composition was ejected by sequentially moving the ejection head while conveying the recording medium by the rotation of the conveyance belt, thereby forming an image with an image drawing resolution of 2,400 dpi. The conveyance belt used here was obtained by laminating a metal belt and a polyimide film. In the vicinity of one edge of this belt, a linear marker was disposed along the conveyance direction and while optically reading this marker by the conveyance belt position-detecting means and driving the position-controlling means, the image was formed. At this time, the distance between the ejection head and the recording medium was kept to 0.5 mm according to the output from an optical gap-detecting device. The surface potential of the recording medium at the ejection was set to -1.5 kV. In performing the ejection, a pulse voltage of +500 V was applied (pulse width: 50 µsec) and the image was formed at a driving frequency of 15 kHz.

On the gray scale image-recorded material (printed matter) obtained, streaked unevenness or bleeding of ink was not observed and a very clear image was formed. Also, image formation failure and the like were not generated at all and the image was completely free from deterioration due to change in the dot size or the like even when the ambient temperature was changed or the recording time was increased. Thus, good image formation could be performed.

### <Evaluation>

Fixing property, Blocking Resistance, and Fixing Property (when solvent was remaining) were estimatedd in the same manner as in the above Examples 1 to 7.

The results are shown in Table 2.

### Example 9:

Ink [EC-9] was prepared in the same manner as in Example 8 by using thoroughly the same materials except that out of the materials used, Coating Agent [AP-6] was changed to [AP-7], and evaluated on the inkjet image drawing and fixing.

The results are shown in Table 2.

### Example 10:

Ink [EC-10] was prepared in the same manner as in Example 8 by using thoroughly the same materials except that out of the materials used, Coating Agent [AP-6] was changed to [AP-8], and evaluated on the inkjet image drawing and fixing.

### Comparative Example 3:

Ink Composition [RC-3] was prepared in the same manner as in Example 8 except that Coating Agent [AP-6] in Example 8 was changed to a comparative polymer, that is, polymethyl methacrylate (Mw: 15,000, produced by Aldrich) [P-1], and evaluated on the inkjet image drawing and fixing.

The results are shown in Table 2.

**Table 2**

| | Coating Agent Polymer | Ink composition | Fixing Property | Blocking Resistance | Fixing Property (when solvent was remaining) |
|---|---|---|---|---|---|
| Example 8 | AP-6 | EC-8 | ○ | ○ | ○ |
| Example 9 | AP-7 | EC-9 | ○ | ○ | ○ |
| Example 10 | AP-8 | EC-10 | ○ | ○ | ○ |
| Comparative Example 3 | P-1 | RC-3 | × | × | × |

As apparent from Table 2, in samples of the present invention using a liquid crystalline polymer, melting can sharply occur as compared with samples using a comparative polymer not containing a functional group having a liquid crystalline group and at the same time, good blocking resistance is attained because crystallization swiftly proceeds by the cooling after fixing.

This application is based on Japanese patent application JP 2003-345359, filed on October 3, 2003, Japanese patent application JP 2004-052174, filed on February 26, 2004, and Japanese patent application JP 2004-178311, filed on June 16, 2004, the entire content of which is hereby incorporated by reference, the same as if set forth at length.

## Claims

1. An ink composition comprising:
(1) a dispersion medium, which is a dielectric liquid having an electric resistivity of ≥ 10¹⁰ Ωcm, and a dielectric constant of ≤ 5, in an amount of 20 to 99 mass% in terms of the ink composition, and
(2) charged particles containing
(a) a coloring material, and
(b1) a copolymer having a polyester structure which has a structural unit represented by the following formula (A) or (B): 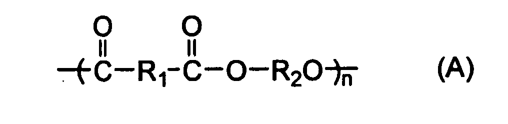 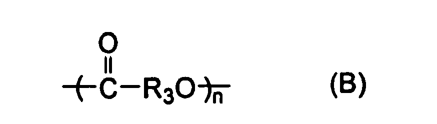 wherein R₁ to R₃ each independently represents a divalent hydrocarbon group having from 1 to 20 carbon atoms, and the hydrocarbon group may contain an ether bond, an amino group, a hydroxy group or a halogen substituent, n is an integer of 2 or more, or
(b2) a polymer having a liquid crystalline structure which contains a polymer side chain having a structure represented by the following formula (I):
-X-Ar-Y-Ar-Z (I)
wherein X represents a single bond or a divalent linking group to the polymer main chain skeleton, Ar represents a divalent aromatic hydrocarbon group which may have a substituent, Y represents a divalent linking group for linking two Ar groups, and Z represents a substituent of the adjacent Ar group,
or both of (b1) and (b2).

2. The ink composition according to Claim 1, wherein said charged particles contain the copolymer (b1).

3. The ink composition according to Claim 2, wherein the copolymer (b1) has a melting point (Tm).

4. The ink composition according to Claim 3, wherein the melting point of the copolymer (b1) is from 20 to 120 °C.

5. The ink composition according to Claim 1, wherein said charged particles contain the polymer having the liquid crystalline structure (b2).

6. An inkjet recording method comprising flying an ink composition as an ink droplet by an inkjet recording system using an electrostatic field, wherein the ink composition is as defined in any one of the preceding claims.

## Patentansprüche

1. Tintenzusammensetzung, die umfaßt:
(1) ein Dispersionsmedium, welches eine dielektrische Flüssigkeit mit einem spezifischen elektrischen Widerstand von ≥ 10¹⁰ Ωcm und einer Dielektrizitätskonstanten von ≤5 ist, in einer Menge von 20 bis 99 Massen% in Bezug auf die Tintenzusammensetzung und
(2) geladene Partikel, enthaltend
(a) einen färbenden Stoff und
(b1) ein Copolymer mit einer Polyesterstruktur, die eine Struktureinheit hat, die durch die folgende Formel (A) oder (B) dargestellt ist: 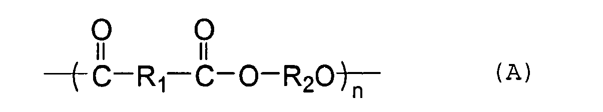 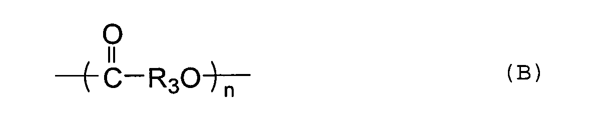 worin R₁ bis R₃ jeweils unabhängig eine zweiwertige Kohlenwasserstoffgruppe mit 1 bis 20 Kohlenstoffatomen bezeichnen und die Kohlenwasserstoffgruppe eine Etherbindung, eine Aminogruppe, eine Hydroxygruppe oder einen Halogensubstituenten enthalten kann, und n eine ganze Zahl von 2 oder mehr ist, oder
(b2) ein Polymer mit einer flüssigkristallinen Struktur, das eine Polymerseitenkette mit einer Struktur enthält, die wiedergegeben ist durch die Formel (I):
-X-Ar-Y-Ar-Z (I)
worin X eine Einfachbindung oder eine zweiwertige Verknüpfungsgruppe zum Polymer-Hauptkettengerüst bezeichnet, Ar eine zweiwertige aromatische Kohlenwasserstoffgruppe bezeichnet, die einen Substituenten haben kann, Y eine zweiwertige Verknüpfungsgruppe zur Verknüpfung der zwei Ar-Gruppen und Z einen Substituenten der benachbarten Ar-Gruppe bezeichnet,
oder beide von (b1) und (b2).

2. Tintenzusammensetzung gemäß Anspruch 1, in der die geladenen Partikel das Copolymer (b1) enthalten.

3. Tintenzusammensetzung gemäß Anspruch 2, in der das Copolymer (b1) einen Schmelzpunkt (Tm) hat.

4. Tintenzusammensetzung gemäß Anspruch 3, in der der Schmelzpunkt des Copolymers (b1) 20 bis 120°C ist.

5. Tintenzusammensetzung gemäß Anspruch 1, in der die geladenen Partikel das Polymer mit der flüssigkristallinen Struktur (b2) enthalten.

6. Tintenstrahl-Aufzeichnungsverfahren, welches das Fliegenlassen einer Tintenzusammensetzung als ein Tintentröpfchen mit einem Tintenstrahl-Aufzeichnungssystem unter Verwendung eines elektrostatischen Feldes umfaßt, bei dem die Tintenzusammensetzung wie in einem der vorstehenden Ansprüche definiert ist.

## Revendications

1. Composition d'encre comprenant:
(1) un milieu de dispersion, qui est un liquide diélectrique ayant une résistivité électrique ≥ 10¹⁰ Ωcm et une constante diélectrique ≤ 5, dans une quantité de 20 à 99 % en masse en termes de composition d'encre, et
(2) des particules chargées contenant
(a) une matière colorante, et
(b1) un copolymère ayant une structure de polyester qui comprend un motif structurel représenté par la formule (A) ou (B) suivante: 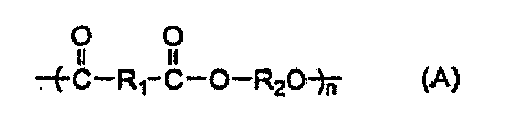 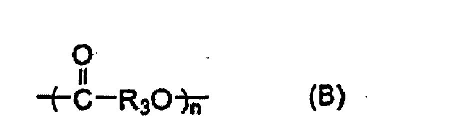 dans laquelle R₁ à R₃ représentent chacun indépendamment un groupe hydrocarboné divalent comportant de 1 à 20 atomes de carbone, et le groupe hydrocarboné peut contenir une liaison éther, un groupe amino, un groupe hydroxy ou un substituant halogéné, n est un nombre entier de 2 ou plus, ou
(b2) un polymère ayant une structure de cristal liquide qui contient une chaîne latérale de polymère ayant une structure représentée par la formule (I) suivante:
-X-Ar-Y-Ar-Z (I)
dans laquelle X représente une liaison simple ou un groupe de liaison divalent sur la chaîne principale du polymère, Ar représente un groupe hydrocarboné divalent aromatique qui peut porter un substituant, Y représente un groupe de liaison divalent pour lier les deux groupes Ar, et Z représente un substituant du groupe Ar adjacent,
ou à la fois (b1) et (b2).

2. Composition d'encre selon la revendication 1, dans laquelle lesdites particules chargées contiennent le copolymère (b1).

3. Composition d'encre selon la revendication 2, dans laquelle le copolymère (b1) a un point de fusion (Tm).

4. Composition d'encre selon la revendication 3, dans laquelle le point de fusion du copolymère (b1) est de 20 à 120°C.

5. Composition d'encre selon la revendication 1, dans laquelle lesdites particules chargées contiennent le polymère ayant la structure de cristal liquide (b2).

6. Procédé d'enregistrement par jet d'encre comprenant le jet d'une composition d'encre sous forme d'une gouttelette d'encre par un système d'enregistrement par jet d'encre à l'aide d'un champ électrostatique, dans lequel la composition d'encre est telle que définie dans l'une quelconque des revendications précédentes.
